(19) **Europäisches Patentamt**

**European Patent Office**

**Office européen des brevets**

(11) **EP 1 313 282 B1**

(12) **EUROPEAN PATENT SPECIFICATION**

(45) Date of publication and mention
of the grant of the patent:
**08.09.2004 Bulletin 2004/37**

(51) Int Cl.⁷: **H04L 27/26**, H04L 25/02

(21) Application number: **02025271.4**

(22) Date of filing: **12.11.2002**

(54) **Method and apparatus for OFDM (orthogonal frequency division multiplexing) demodulation**

Verfahren und Vorrichtung zur OFDM- (orthogonale Frequenzmultiplexierung) Demodulation

Procédé et dispositif de démodulation MFDO (multiplexage par division en fréquences orthogonales)

(84) Designated Contracting States:
**DE FR GB**

(30) Priority: **15.11.2001 JP 2001349886**
**12.07.2002 JP 2002203839**

(43) Date of publication of application:
**21.05.2003 Bulletin 2003/21**

(73) Proprietor: **MATSUSHITA ELECTRIC INDUSTRIAL CO., LTD.**
**Kadoma-shi, Osaka 571-8501 (JP)**

(72) Inventors:
 • **Kisoda, Akira**
 **JP -570-0015 Moriguchi-City, Osaka Pref. (JP)**

 • **Mori, Ryosuke**
 **JP -562-0005 Minoo City, Osaka Pref. (JP)**
 • **Taniguchi,Tomohiko**
 **JP -538-0035 Osaka-City, Osaka Pref. (JP)**
 • **Hayashi, Daisuke**
 **JP -572-0089 Neyagawa-City, Osaka-Pref. (JP)**

(74) Representative:
**Kirschner, Klaus Dieter, Dipl.-Phys.**
**Böck, Tappe, Kirschner**
**Rechtsanwälte - Patentanwälte**
**Sollner Strasse 38**
**81479 München (DE)**

(56) References cited:
**EP-A- 0 838 928** **EP-A- 0 998 068**
**EP-A- 1 154 602** **US-A1- 2001 015 954**

**Description**

The present invention relates to an orthogonal frequency division multiplex (OFDM) demodulation method and an OFDM demodulator used for digital broadcasting by an OFDM transmission system.

Recently, a ground digital television broadcasting system has been studied hard. In the United States of America, a VSB system is utilized. In European countries and Japan, an orthogonal frequency division multiplex (OFDM) system is utilized as a transmission system. In England and Singapore and the like, commercial service for such system has already started. The OFDM system divides a transmission signal into a large number of carriers that are orthogonal with each other, multiplexes the carriers and transmits the same.

An OFDM signal may have long symbol interval because of a large number of carriers being used. For this reason, an interval during which a part of signal is cyclicly copied and then transmitted, i.e., a so-called guard interval may be provided. A delayed wave within the guard interval does not occur an interference between symbols. Thus, an equalizer of OFDM demodulator can be simply structured.

In accordance with the OFDM system used in European countries and Japan, a channel characteristic is estimated at a receiving end. Thus, scattered pilot signals (SP signals) for modulating carriers periodically distributed in directions of symbol time and carrier frequency at specified phase and amplitude is provided at a transmitting end. Besides, continual pilot signals (CP signals), transmission parameter signals (TMCC signals), and ancillary information signals (AC signals) are placed at specified carrier positions and data signals are placed at other carrier positions.

Conventionally, at a receiving end, a scattered pilot signal is fetched and a fetched pilot signal is divided by known amplitude and phase. In this way, a channel characteristic at a position of the scattered pilot signal is obtained. A channel characteristic at each information carrier position is calculated by interpolating the scattered pilot signal in directions of symbol time and carrier frequency.

Conventionally in ground digital broadcasting, fixed receivers for receiving HDTV signal have been mainly considered. Under a fixed receiving environment, for interpolation in symbol direction, a zero order hold filter is utilized in order to reduce a scale of circuit.

The reference EP 0 838 928 shows an equalisation system of multicarrier signals, whereby the qualization system is more robust, when the channel impulse response exceeds the duration of a guard interval. A first fast estimate of a channel transfer function on pilot carriers is performed, with an interpolator filter having a certain bandwidth. This estimate is coarse and is limited to echoes with short delay. A second slow channel estimate on data carriers is conducted using a nonlinearity and a time-domain filter, leaving aside a phase ambiguity. Subsequently the second channel estimate as derived from the data carriers is integrated with the first estimate evaluated from the pilot carriers, and the result is filtered in the frequency domain using a bandwidth.

US 2001/0015954 shows an OFDM-receiver device which extracts a pilot signal from OFDM-Signal, calculates a transmission path response by complex-dividing and then calculates after interpolation and a further complex-dividing a mapping vector. This receiver device comprises merely the features of a first equalizer according to the present invention.

Recently, receiving of mobile which is one of characteristics for ground digital broadcasting has attracted attention. Under an environment of receiving a mobile, a channel varies significantly. For this reason, there is a limit to conventionally estimate a channel for scattered pilot signal in symbol direction by using a zero order hold filter. Thus, it is considered that linear interpolation of scattered pilot signal in symbol time direction must be required. Nevertheless, only linear interpolation of scattered pilot signal is insufficient for characteristics under an environment of receiving a mobile. Thus, it has been studied to use diversity or the like simultaneously.

It is an object of the invention to provide an OFDM demodulation method and an OFDM demodulator used for improving receiving performance under an environment of receiving a mobile.

This object is achieved by the method of claim 1 and the demodulator of claim 10. Advantageous embodiments are characterized in the sub-claims.

The present invention provides a demodulation technique used for orthogonal frequency division multiplex (OFDM) transmission system which modulates a plurality of carriers with their frequencies being orthogonal with each other for each symbol period so as to transmit digital information.

When a scattered pilot signal and a continual pilot signal are modulated by specified amplitude and phase that are uniquely determined by a carrier number k of carrier in an over-all transmission band, among a received signal $Yn,l$ subjected to FFT, a scattered pilot signal $SPn,k$ is firstly fetched. Next, the scattered pilot signal is interpolated in time direction and frequency direction, thereby estimating a channel characteristic $Hn,1$. $Yn,1$ is complex-divided by the resultant channel characteristic $Hn,1$, whereby mapping vectors $Xn,l$ for transmission parameter signal, ancillary information signal and data signal placed at the various carrier positions are reconstituted.

By hard-deciding the reconstituted mapping vectors $Xn,1$, a primary mapping vector $X'n,l$ at each carrier position is calculated. Then, $Yn,l$ is complex-divided by the mapping vector $X'n,l$, thereby caluculating a primary channel characteristic $H'n,l$.

The resultant H'n,l is filtered in frequency direction, thereby calculating a secondary channel characteristic H''n,1. By dividing Yn,1 by H''n,1, a secondary mapping vector X''n,1 is calculated.

By repeating such equalization process for several times, precision in estimation of channel characteristic can be improved especially under an environment of receiving a mobile while a receiving performance under the environment of receiving a mobile can be improved.

Embodiments of the invention are now described with reference to the drawings.

Fig. 1 is a block diagram showing an overall structure of an OFDM demodulator according to a first embodiment of the present invention;

Fig. 2 illustrates an arrangement of carriers for an OFDM signal;

Fig. 3 is mapping illustrations showing arrangements of a received signal used for the OFDM demodulator of the present invention;

Fig. 4 illustrates thresholds for mapping points used for calculating a channel characteristic in hard-decided data;

Figs. 5A to 5C illustrate arrangements of received signals obtained by a conventional decoding method and decoding methods of embodiments of the present invention;

Fig. 6 is a block diagram showing an overall structure of an OFDM demodulator according to a second embodiment of the present invention;

Fig. 7 is a block diagram showing structures of a first equalizer A and a second equalizer B of an OFDM demodulator according to a third embodiment of the present invention;

Fig. 8 is a block diagram showing a structure of a third equalizer C of the OFDM demodulator according to the third embodiment of the present invention;

Fig. 9 is a block diagram showing structures of a first equalizer A and a second equalizer B of an OFDM demodulator according to a fourth embodiment of the present invention;

Fig. 10 is a block diagram showing a structure of a third equalizer C of the OFDM demodulator according to the fourth embodiment of the present invention;

Fig. 11 is a block diagram showing structures of a first equalizer A and a second equalizer B of an OFDM demodulator according to a fifth embodiment of the present invention;

Fig. 12 is a block diagram showing a structure of a third equalizer D of the OFDM demodulator according to the fifth embodiment of the present invention;

Fig. 13 is a block diagram showing structures of a first equalizer A and a second equalizer B of an OFDM demodulator according to a sixth embodiment of the present invention;

Fig. 14 is a block diagram showing a structure of a third equalizer E of the OFDM demodulator according to the sixth embodiment of the present invention;

Fig. 15 is a block diagram showing structures of a first equalizer A and a second equalizer B of an OFDM demodulator according to a seventh embodiment of the present invention; and

Fig. 16 is a block diagram showing a structure of a third equalizer F of the OFDM demodulator accoridng to the seventh embodiment of the present invention.

Prior to the detail description of embodiments of the present invention, a basic principle of the present invention will be described by using mathematical expressions. A parameter n indicates a symbol number and a parameter k indicates a carrier number. Parameter Yn,k indicates a received OFDM signal after FFT processing. A channel characteristic is indicated by Hn,k. Parameter Xn,k indicates a received signal (also referred to as a mapping vector) at each carrier position. The received signal Xn,k is equalized by using the following formula (1):

$$Xn,k = Yn,k/Hn,k \hspace{4cm} (1).$$

Calculation of the channel characteristic Hn,k is described in various references. This calculation is described in detail in the embodiments of the present invention. The channel characteristic is calculated by interpolating a scattered pilot signal in time direction and frequency direction. Under an environment of receiving a mobile, however, Hn,k calculated by the scattered pilot signal may not necessarily be a precisely estimated value for the channel characteristic.

In accordance with the present invention, a received signal Xn,k is firstly reconstituted by using a channel characteristic calculated by using a scattered pilot signal. Then, a hard decision is performed for Xn,k in accordance with mapping information at each carrier position. If a distance from an original mapping point is equal to or shorter than a threshold (Th), it is determined that Xn,k has reliability.

Next, the aforementioned formula (1) is transformed, thereby obtaining the following formula (2):

$$H'n,k = Yn,k/Xn,k \qquad (2).$$

If it is determined that Xn,k has reliability, a new channel characteristic H'n,k at a carrier position is calculated by using the formula (2) and a mapping vector subjected to hard decision at an original signal point. Since H'n,k calculated at the carrier position has more reliability than Hn,k at the same carrier position, Hn,k is replaced with H'n,k. A new channel characteristic is filtered in frequency direction. The newly calculated channel characteristic has more reliability because of the above-described process. Thus, more precise received data can be obtained by using again the formula (1). Such process can be repeated.

(First Embodiment)

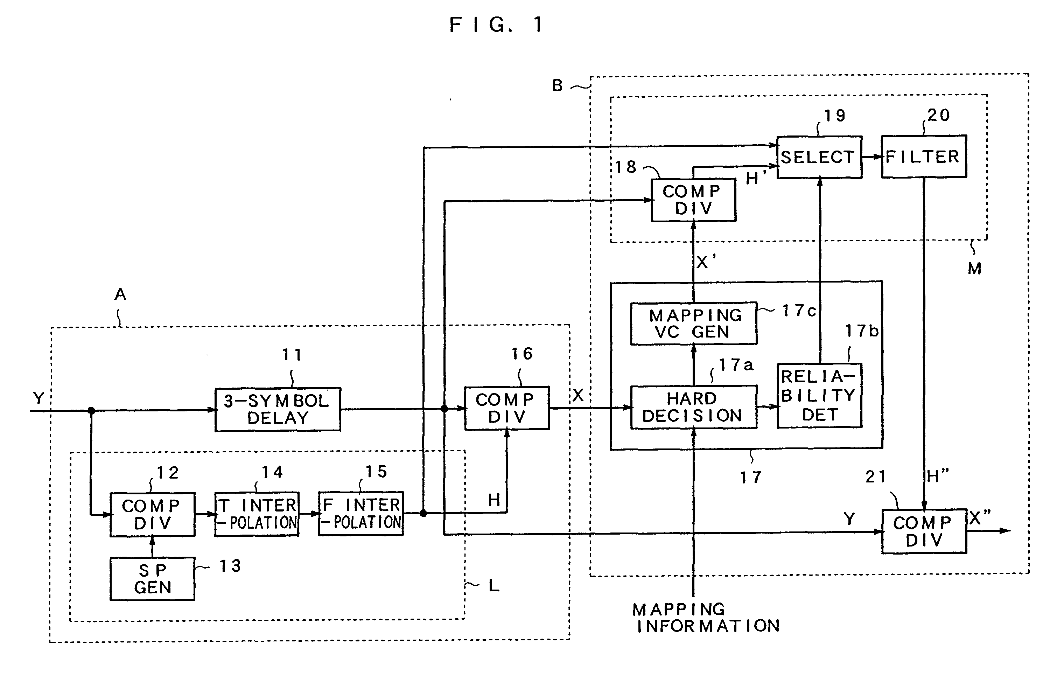

Next, an OFDM demodulator according to a first embodiment will be described with reference to the drawings. Fig. 1 shows a structural view of an OFDM demodulator of the first embodiment. The OFDM demodulator is configured so as to hard-decide a demodulated received signal and then calculate again a channel characteristic. In a receiving system shown in Fig. 1, a received OFDM signal is subjected to FFT processing. Then, a resultant signal is inputted, as an OFDM signal, to a first equalizer A shown by broken lines. The first equalizer A is configured so as to include a first channel estimation block L, a three-symbol delay unit 11 and a second complex divider (COMP DIV) 16. The first equalizer A estimates a channel characteristic by linearly interpolating a scattered pilot signal, and then equalizes a received OFDM decoded signal.

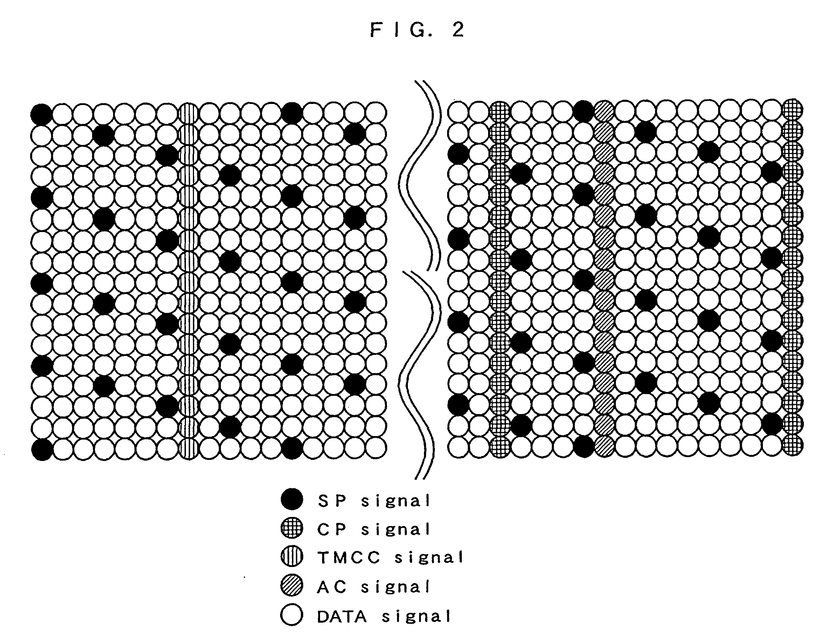

Fig. 2 shows an example of an arrangement of an OFDM signal. Mod is a symbol indicating a residue operation and p indicates an integer number. As shown in Fig. 2, scattered pilot signals (SP signal) are distributed and arranged at specified carrier positions. Within a corresponding segment, each of specified position satisfies k = 3 (n mod 4) + 12p for symbol with symbol number n, where k is a carrier number.

Referring to Fig. 1, a scattered pilot signal is fetched from an OFDM signal. Then, at a first complex divider 12, the scattered pilot signal is complex-divided by a reference SP signal outputted from an SP signal generator (SP GEN) 13. The scattered pilot signal is a signal which is modulated by specified amplitude and phase that are uniquely determined at a time of its transmission by a carrier number k in an overall transmission band for the corresponding carrier. By dividing the transmitted scattered pilot signal by the reference SP signal, the amplitude and the phase of the scattered pilot signal are aligned in a direction and a channel characteristic at the position of the scattered pilot signal can be calculated.

A time direction linear interpolation circuit (T INTERPOLATION) 14 interpolates a scattered pilot signal in symbol time direction. Thus, a channel characteristic at the position of the carrier number k = 3p can be estimated. As linear interpolation is performed in symbol time direction, an OFDM signal subjected to FFT is delayed by three symbols at the three-symbol delay unit 11.

A frequency direction interpolation circuit 15 (F INTERPOLATION) is a filter for interpolating a channel characteristic in frequency direction. Thus, the channel characteristics at all carrier number positions can be estimated. In the first equalizer A, the SP signal generator 13, the first complex divider 12, the time direction linear interpolation circuit 14 and the frequency direction interpolation circuit 15 constitute a first channel estimation block L. A second complex divider 16 complex-divides an OFDM signal subjected to FFT by a channel characteristic so as to reconstitute a phase and an amplitude of the OFDM signal.

As described above, the phase and the amplitude of the conventional OFDM signal are processed by the first equalizer A shown in Fig. 1, and thus a data signal is decoded. As seen from a signal arrangement shown in Fig. 2, the number of scattered pilot signals is small. Thus, under an environment of receiving a mobile, a channel characteristic cannot sufficiently estimated only by the above-described process.

In accordance with the present embodiment, as shown in Fig. 1, a second equalizer B is provided. The second equalizer B performs hard decision process, on the basis of mapping information, for a signal whose amplitude and phase have been determined at the first equalizer A for each mapping.

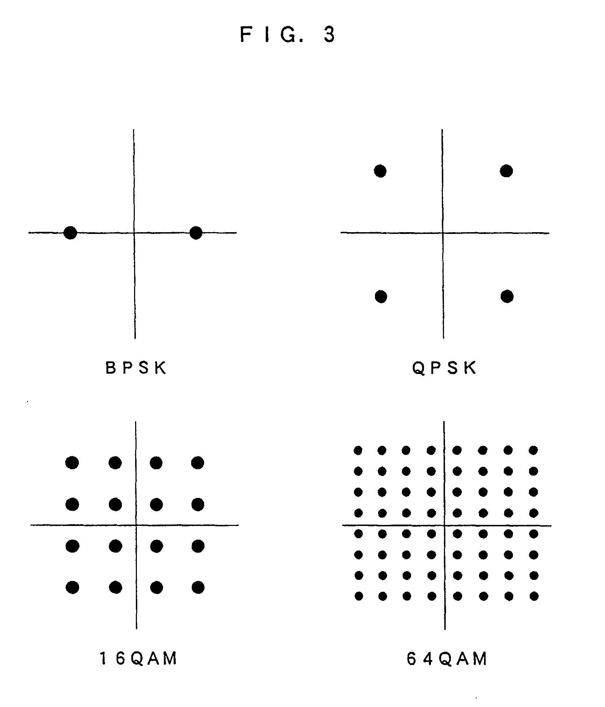

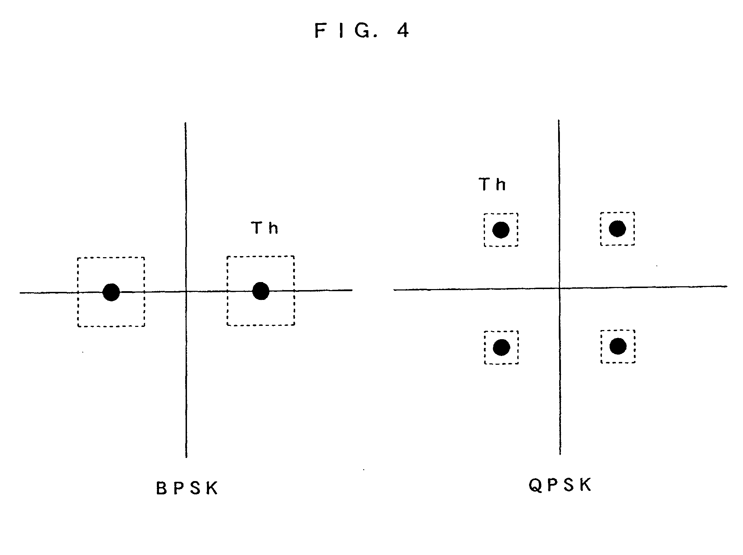

Fig. 3 shows constellation diagrams showing the various mapping points. Euclidean distances between mapping points are different for each of mappings, i.e., for each of BPSK, QPSK, 16QAM and 64QAM. Fig. 4 illustrates thresholds (Th) of BPSK and QPSK utilized for the present invention for data subjected to hard decision. Although not shown in Fig. 4, thresholds are used for 16QAM and 64QAM, respectively. The shorter the distance between signal points of mapping, the smaller threshold may be used or may not be used. In accordance with the present embodiment, a threshold is provided for each mapping.

At a hard decision block 17 shown in Fig. 1, data which is subjected to hard decision at a hard decision unit 17a is supplied to a reliability detection block 17b. At the reliability detection block (RELIABILITY DET) 17b, reliability of the data is determined based on the aforementioned threshold. Further, the data which is subjected to hard decision at the hard decision unit 17a is supplied to a mapping vector generator (MAPPING VC GEN) 17c. At the mapping vector generator 17c, a mapping vector at a hard decision point is selected.

A third complex divider 18 divides a signal subjected to FFT by a mapping vector from the mapping vector generator 17c. A resultant signal obtained by division is a channel characteristic H'n,1 at the carrier position. If it is determined at the reliability detection block 17b that the channel characteristic H'n,1 has reliability, the channel characteristic H'n,1 has higher reliability than the channel characteristic Hn,1 at the carrier position. Hence a selection circuit (SELECT) 19 substitutes the channel characteristic H'n,1 at the carrier position obtained at the frequency direction interpolation circuit 15 for the channel characteristic Hn,1.

If it is determined at the reliability detection block 17b that the channel characteristic H'n,1 does not have reliability, the selection circuit 19 selects the channel characteristic Hn,1 that is calculated by the frequency direction interpolation circuit 15. The channel characteristic selected by the selection circuit 19 is subjected to filter process at a frequency direction filter 20.

A fourth complex divider 21 divides a signal Yn,1 subjected to FFT by using a second channel characteristic H''n,1 calculated by the frequency direction filter 20 so as to obtain a signal with newly determined amplitude and phase. This signal is referred to as a second mapping vector X''n,1. The third complex divider 18, the hard decision block 17, the selection circuit 19 and the frequency direction filter 20 in the second equalizer B constitute a second channel estimation block M. Accordingly, the second equalizer B is formed of the second channel estimation block M, the hard decision block 17 and the fourth complex divider 21.

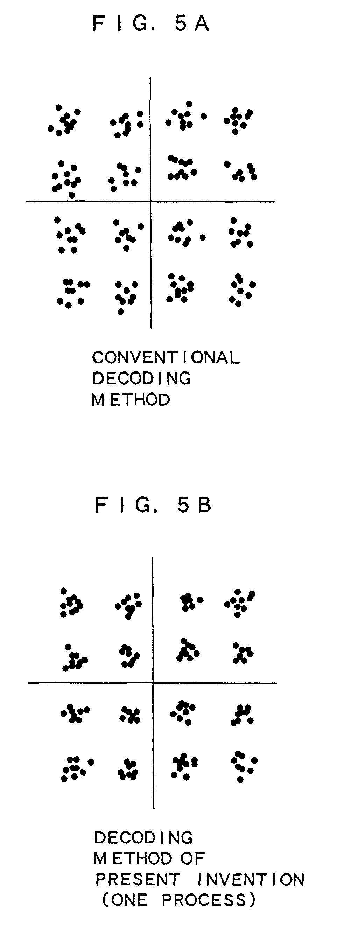

Figs. 5A to 5C show one example of signal points obtained by the present embodiment. Fig. 5A shows a distribution of signal outputted from the complex divider 16 of the equalizer A shown in Fig. 1. Fig. 5B shows a distribution of signal outputted from the complex divider 21 of the second equalizer B shown in Fig. 1. 16QAM is utilized in the present embodiment. As seen from the figures, a distribution range of constellation of Fig. 5B is smaller than that of Fig. 5A. In this way, reliability of decoded data is improved.

(Second Embodiment)

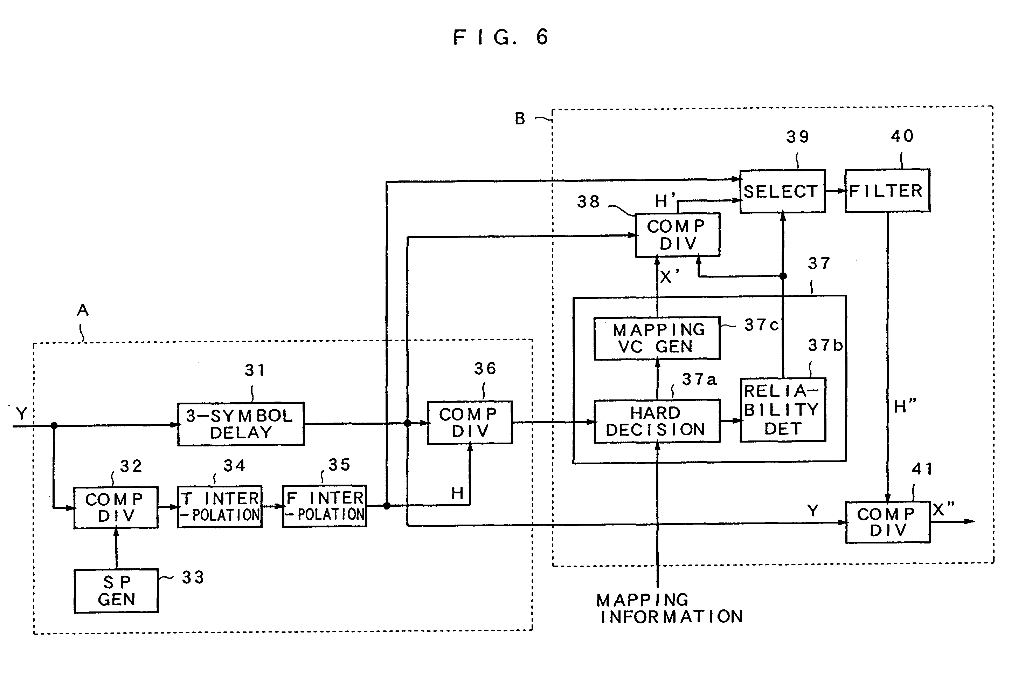

An OFDM demodulator according to a second embodiment of the present invention will be described. Fig. 6 is a structural view of the OFDM demodulator of the second embodiment. The OFDM demodulator is also configured so as to hard-decide a demodulated received signal and then calculate again a channel characteristic. As in the first embodiment, the first equalizer A includes a three-symbol delay unit 31, a first complex divider 32, an SP signal generator 33, a time direction linear interpolation circuit 34, a frequency direction interpolation circuit 35 and a second complex divider 36. The second equalizer B includes a hard decision block 37, a third complex divider 38, a selection circuit 39, a frequency direction filter 40 and a fourth complex divider 41. The hard decision block 37 includes a hard decision unit 37a, a reliability detection block 37b and a mapping vector generator 37c.

The second embodiment is different from the first embodiment in that: when it is determined by the reliability detection block 37b that low reliability is provided, then a stop signal is outputted and a complex dividing process is not performed by the complex divider 38. Namely, at the reliability detection block 37b, a predetermined threshold is provided for each type of mapping and it is determined whether or not a mapping vector Xn,1 is within a predetermined threshold. If the mapping vector is within the predetermined threshold, the selection circuit 39 selects the primary channel characteristic H'n,1. Other processes are the same as in the first embodiment and the same effects as those of the first embodiment can be obtained.

(Third Embodiment)

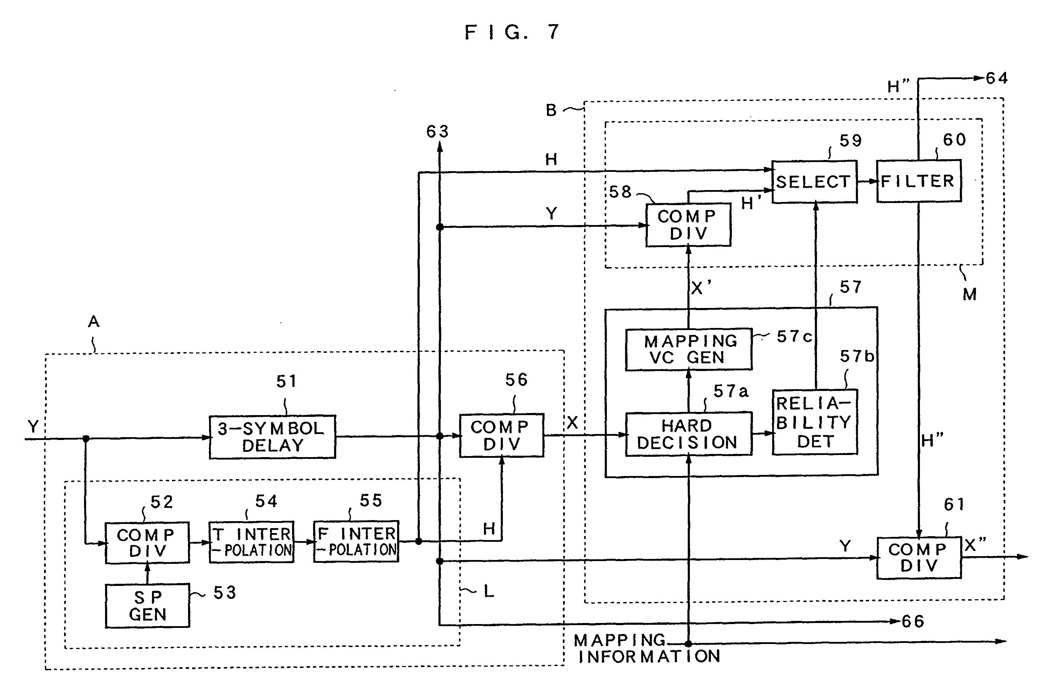

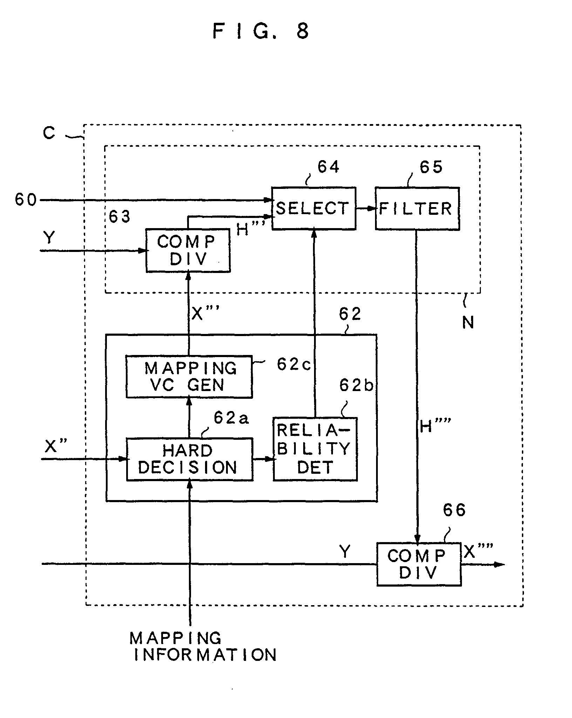

An OFDM demodulator according to a third embodiment of the present invention will be described. Figs. 7 and 8 are structural views of the OFDM demodulator according to the third embodiment. The OFDM demodulator is configured so as to include the first equalizer A and the second equalizer B shown in Fig. 1 and a third equalizer C shown in Fig. 8.

As in the first embodiment, the first equalizer A has a first channel estimation block L, a three-symbol delay unit 51 and a second complex divider 56. The first channel estimation block L is configured so as to include a first complex divider 52, an SP signal generator 53, a time direction linear interpolation circuit 54 and a frequency direction interpolation circuit 55.

The SP signal generator 53 generates a known SP signal. The first complex divider 52 complex-divides a scattered pilot signal SPn,k of the received signal Yn,1 subjected to FFT by an output of the SP signal generator 53. The time direction linear interpolation circuit 54 interpolates an output of the first complex divider 52 in time direction. The frequency direction interpolation circuit 55 interpolates an output of the time direction linear interpolation circuit 54 in frequency direction so as to output a channel characteristic Hn,1. The second complex divider 56 complex-divides Yn,1 by the channel characteristic Hn,1 and thus outputs a mapping vector Xn,l.

The second equalizer B has a second channel estimation block M, a first hard decision block 57 and a fourth complex divider 61. The second channel estimation block M is configured so as to include a third complex divider 58, a first selection circuit 59 and a first frequency direction filter 60. The third complex divider 58 complex-divides a received signal Yn,l by a mapping vector X'n,l. The first selection circuit 59 selects an output H'n,l of the third complex divider 58 or a channel characteristic Hn,1 depending on an output of the reliability detection block 57b. The first frequency direction filter 60 filters an output of the first selection circuit

The first hard decision block 57 includes a first hard decision unit 57a, a first reliability detection block 57b and a first mapping vector generator 57c. The first hard decision unit 57a hard-decides an output Xn,1 of the first equalizer A. The first reliability detection block 57b detects reliability of result of hard decision. The first mapping vector generator 57c calculates a primary mapping vector X'n,1 on a basis of decision result of the first hard decision unit 57a. The fourth complex divider 61 calculates a secondary mapping vector X"n,1 by complex-dividing a received signal Yn,1 by an output H"n,1 of the first frequency direction filter 60.

A third equalizer C shown in Fig. 8 has a third channel estimation block N, a second hard decision block 62 and a sixth complex divider 66. The third equalizer C repeats a process performed by the second equalizer B. The third channel estimation block N is configured so as to include a fifth complex divider 63, a second selection circuit 64 and a second frequency direction filter 65. The fifth complex divider 63 complex-divides a received signal Yn,1 by a mapping vector X'''n,1. The second selection circuit 64 selects an output H'''n,1 of the fifth complex divider 63 or a channel characteristic H"n,1 depending on an output of the second hard decision block 62. The second frequency direction filter 65 filters an output of the second selection circuit 64.

The second hard decision block 62 is configured so as to include a second hard decision unit 62a, a second reliability detection block 62b and a mapping vector generator 62c. The second hard decision unit 62a hard-decides an output X"n,1 of the second equalizer B. The second reliability detection block 62b detects reliability of result of hard decision. The second mapping vector generator 62c calculates a mapping vector X'''n,1 on the basis of decision result of the second hard decision unit 62a. The sixth complex divider 66 calculates a quaternary mapping vector X""n,1 by complex-dividing a received signal Yn,1 by an output H""n,1 of the second frequency direction filter 65.

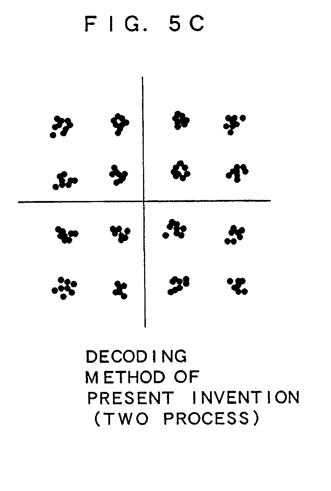

The third equalizer C repeats the same process as in the second equalizer B. Thus, as shown in Fig. 5C, mapping points of received signal can be further converged into a central position of each of symbol points.

(Fourth Embodiment)

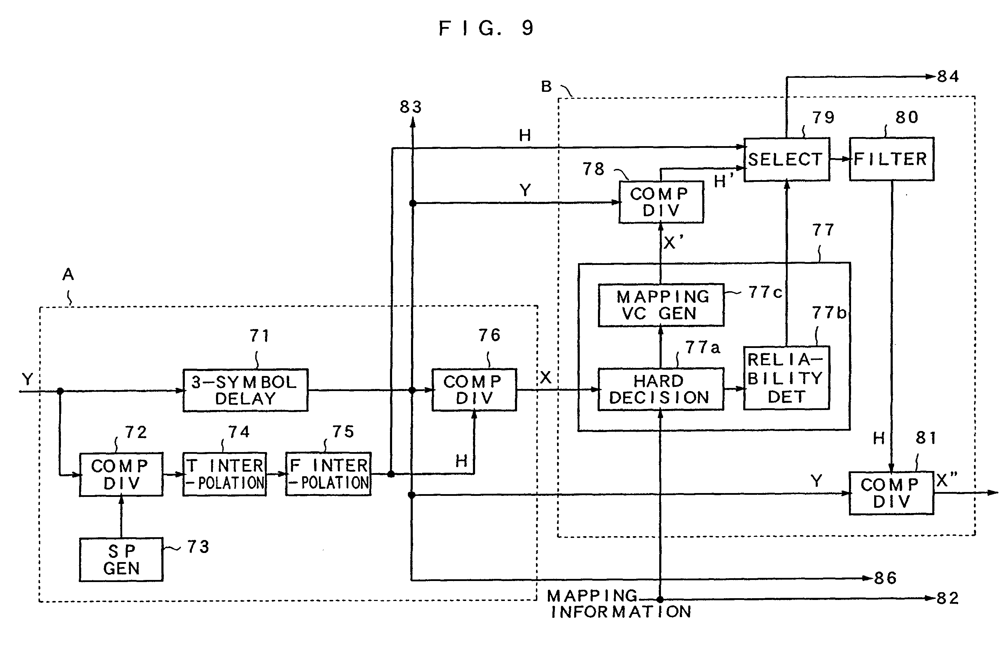

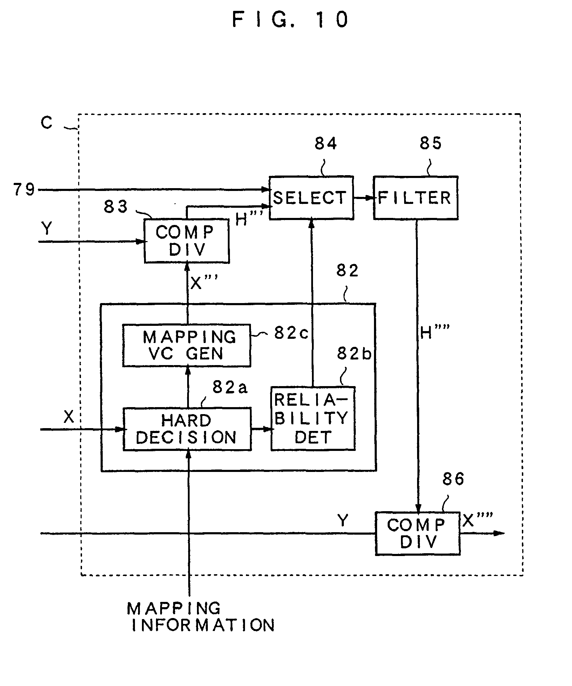

An OFDM demodulator according to a fourth embodiment of the present invention will be described. Figs. 9 and 10 are structural views of the OFDM demodulator of the fourth embodiment. The OFDM demodulator has a first equalizer A and a second equalizer B shown in Fig. 9 and a third equalizer C shown in Fig. 10.

The first equalizer A includes, as in the first to third embodiments, a three-symbol delay unit 71, a first complex divider 72, an SP signal generator 73, a time direction linear interpolation circuit 74, a frequency direction interpolation circuit 75, and a second complex divider 76.

The second equalizer B includes a first hard decision block 77, a third complex divider 78, a first selection circuit 79, a first frequency direction filter 80 and a fourth complex divider 81. The first hard decision block 77 is configured so as to include a first hard decision unit 77a, a first reliability detection block 77b and a first mapping vector generator 77c.

The third equalizer C repeats same process as performed by the second equalizer B. As shown in Fig. 10, the third equalizer C includes a second hard decision block 82, a fifth complex divider 83, a second selection circuit 84, a second frequency direction filter 85, and a sixth complex divider 86. The second hard decision block 82 includes a second hard decision unit 82a, a second reliability detection block 82b, and a second mapping vector generator 82c.

The present embodiment is different from the third embodiment only in that: a signal inputted to the selection circuit 84 is not an output of the frequency direction filter 80 but an output of the selection circuit 79. Namely, the second reliability detection block 82b applies a predetermined threshold to each type of mapping and determines whether or not a mapping vector X"n,1 is within a predetermined threshold. If it is determined that the mapping vector is within the predetermined threshold, the second selection circuit 84 selects H'''n,1. If it is determined that the mapping vector is outside the predetermined threshold, the second selection circuit 84 selects the output of the selection circuit 79. In accordance with the present embodiment, almost the same effects as in the OFDM demodulator of the third embodiment can be obtained.

(Fifth Embodiment)

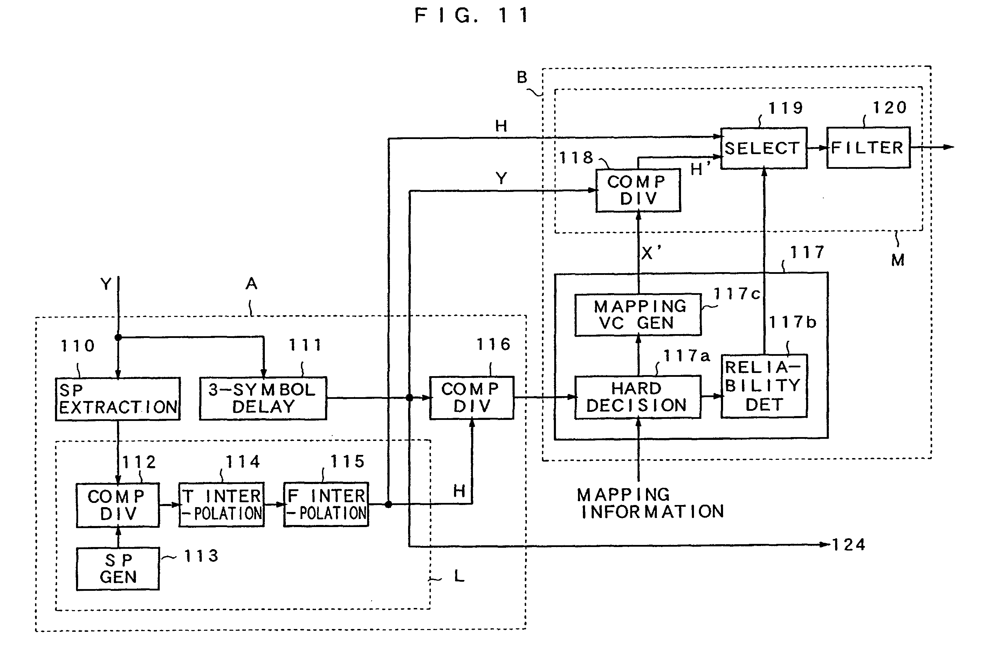

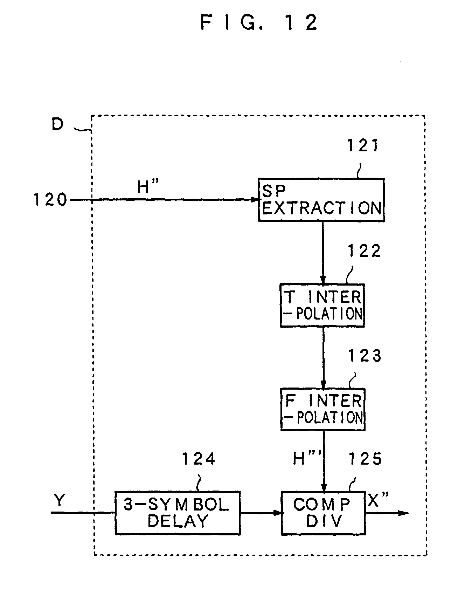

Next, an OFDM demodulator according to a fifth embodiment of the present invention will be described. Figs. 11 and 12 are structural views of the OFDM demodulator of the fifth embodiment. The OFDM demodulator includes a first equalizer A and a second equalizer B shown in Fig. 11 and a third equalizer D shown in Fig. 12.

The first equalizer A includes an SP extraction unit 110, a three-symbol delay unit 111, a first channel estimation block L and a second complex divider 116. The SP extraction unit 110 extracts an SP signal from a received signal Yn,1 subjected to FFT. The first channel estimation block L includes an SP signal generator 113, a first complex divider 112, a time direction linear interpolation circuit 114, and a frequency direction interpolation circuit 115.

The SP signal generator 113 generates a known SP signal. The first complex divider 112 complex-divides a distributed split signal SPn,k of received signal Yn,1 subjected to FFT by an output of the SP signal generator 113. The time direction linear interpolation circuit 114 interpolates an output of the first time direction complex divider 112. The frequency direction interpolation circuit 115 interpolates an output of the time direction linear interpolation circuit 114 in frequency direction so as to calculate a channel characteristic Hn,1. The second complex divider 116 complex-divides the received signal Yn,1 by the channel characteristic Hn,1 and thus outputs a mapping vector Xn,1.

The second equalizer B includes a hard decision block 117 and a second channel estimation block M. The hard decision block 117 includes a hard decision unit 117a, a reliability detection block 117b, and a mapping vector generator 117c. The hard decision unit 117a hard-decides an output Xn,1 of the first equalizer A. The reliability detection block 117b detects reliability of result of hard decision. The mapping vector generator 117c calculates a mapping vector X'n,1 on the basis of result of decision of the hard decision unit 117a.

The second channel estimation block M is configured so as to include a third complex divider 118, a selection circuit 119, and a frequency direction filter 120. The third complex divider 118 complex-divides the received signal Yn, 1 by the mapping vector X'n,1. The selection circuit 119 selects an output H'n,1 of the third complex divider 118 or a channel characteristic Hn,1 depending on an output of the reliability detection block 117b. The frequency direction filter 120 filters an output of the selection circuit 119 and outputs a secondary channel characteristic H"n,1.

As shown in Fig. 12, the third equalizer D includes an SP extraction unit 121, a time direction linear interpolation circuit 122, an frequency direction interpolation circuit 123, a three-symbol delay unit 124, and a fourth complex divider 125. The SP extraction unit 121 extracts an SP signal at a scattered pilot signal position SPn,k by using the channel characteristic H"n,1 obtained by the second equalizer B. The time direction linear interpolation circuit 122 interpolates an output of the SP extraction unit 121 in time direction. The frequency direction interpolation circuit 123 interpolates an output of the time direction linear interpolation circuit 122 in frequency direction so as to calculate a tertiary channel characteristic H'''n,1. The fourth complex divider 125 complex-divides a received signal Yn,1 which is delayed by the three-symbol delay unit 124 by the channel characteristic H'''n,1.

Referring to Fig. 11, for the purpose of comparison of the third equalizer D to the first equalizer A, the SP extraction unit 110 is shown in the first equalizer A. However, the SP extraction unit 110 is not shown in the first to fourth embodiments.

In accordance with the fifth embodiment, same as the channel characteristic calculated in the first embodiment, a channel characteristic at an SP signal position is extracted from an output of the frequency direction filter 120 by the SP extraction unit 121. Then, the channel characteristic at the SP signal position is interpolated in time direction by the time direction linear interpolation circuit 122. In this way, a channel characteristic at a position of carrier number k = 3p (wherein p indicates an integer number) is estimated. Because linear interpolation is performed in a symbol direction, an OFDM signal subjected to FFT is further delayed by three symbols at the three-symbol delay unit 124. As compared to the channel characteristic at the complex divider 112 shown in Fig. 11, the channel characteristic extracted by the SP extraction unit 121 has a noise removed and high reliability. Subsequent time direction linear interpolation circuit 122 and frequency direction interpolation circuit 123 operate similarly to the interpolation circuit 114 and the interpolation circuit 115 in the first equalizer A.

An output of the three-symbol delay unit 124 is divided at the complex divider 125 by using a channel characteristic serving as an output of the frequency direction interpolation circuit 123 which is calculated again. As a result, a signal at each carrier position can be reconstituted with high precision.

(Sixth Embodiment)

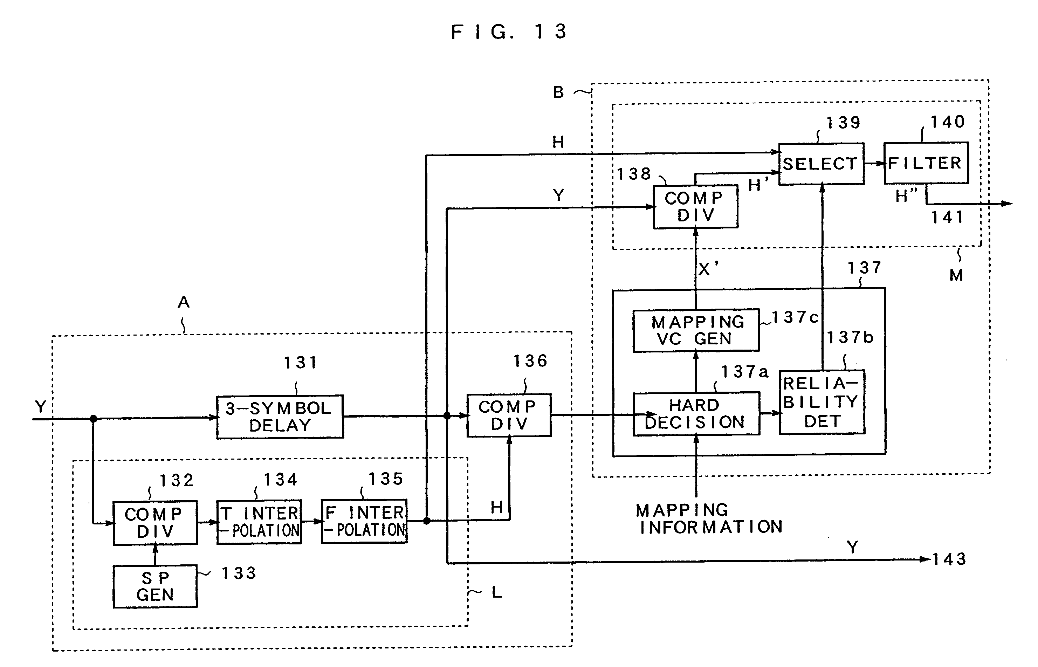

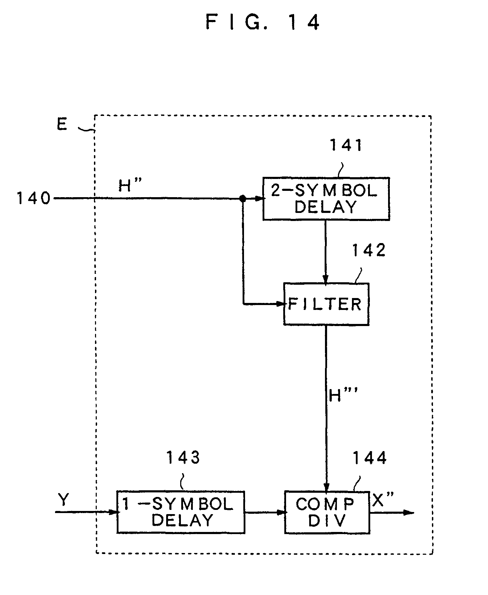

Next, an OFDM demodulator of a sixth embodiment of the present invention will be described. Figs. 13 and 14 are structural views of the OFDM demodulator according to the sixth embodiment. The OFDM demodulator includes a first equalizer A and a second equalizer B shown in Fig. 13 and a third equalizer E shown in Fig. 14.

The first equalizer A includes a first channel estimation block L, a three-symbol delay unit 131 and a second complex divider 136. The first channel estimation block L includes an SP signal generator 133, a first complex divider 132, a time direction linear interpolation circuit 134, and a frequency direction interpolation circuit 135.

The SP signal generator 133 generates a known SP signal. The first complex divider 132 complex-divides a scattered pilot signal SPn,k of received signal Yn,1 subjected to FFT by an output of the SP signal generator 133. The time direction linear interpolation circuit 134 interpolates an output of the first complex divider 132 in time direction. The frequency direction interpolation circuit 135 interpolates an output of the time direction linear interpolation circuit 134 in frequency direction so as to calculate a channel characteristic Hn,1. The second complex divider 136 complex-divides the received signal Yn,1 by the channel characteristic Hn,1 so as to output a mapping vector Xn,1.

The second equalizer B includes a hard decision block 137 and a second channel estimation block M. The hard decision block 137 includes a hard decision unit 137a, a reliability detection block 137b, and a mapping vector generator 137c. The hard decision unit 137a hard-decides an output Xn,1 of the first equalizer A. The reliability detection block 137b detects reliability of result of hard decision. The mapping vector generator 137c calculates a mapping vector X'n,1 of output of the hard decision unit 137a.

The second channel estimation block M includes a third complex divider 138, a selection circuit 139, and a frequency direction filter 140. The third complex divider 138 complex-divides the received signal Yn,1 by the mapping vector X'n,1. The selection circuit 139 selects an output H'n,1 of the third complex divider 138 or a channel characteristic Hn,1 depending on an output of the reliability detection block 137b. The frequency direction filter 140 filters an output of the selection circuit 139 and outputs a secondary channel characteristic H"n,1.

The third equalizer E includes a two-symbol delay unit 141, a time direction filter 142, an one-symbol delay unit 143, and a fourth complex divider 144.

The two-symbol delay unit 141 delays the channel characteristic H"n,1 obtained by the second equalizer B by two symbols. The time direction filter 142 interpolates an output H"n-2,1 of the two-symbol delay unit 141 and the channel characteristic H"n,1 not subjected to symbol delay in time direction so as to obtain a tertiary channel characteristic H"'n-1,1. The one-symbol delay unit 143 delays a received signal Yn,1 obtained from the first equalizer A by one symbol. The fourth complex divider 144 complex-divides the signal Yn-1,1 which is delayed by one symbol by an output H"'n-1,1 of the time direction filter 142.

In accordance with the sixth embodiment, a channel characteristic outputted from the frequency direction filter 140 in the second equalizer B is delayed by two symbols at the two-symbol delay unit 141. The channel characteristic delayed by two symbols and the channel characteristic which is not delayed at the same carrier position are averaged by the time direction filter 142. Then, a channel characteristic at an intermediate symbol position is calculated by the following formula (3):

$$H(n-1,k) = [H(n,k) + H(n-2,k)]/2 \qquad (3).$$

The one-symbol delay unit 143 further delays a signal subjected to FFT by one symbol at in order to make this process correspond to a delay time.

(Seventh Embodiment)

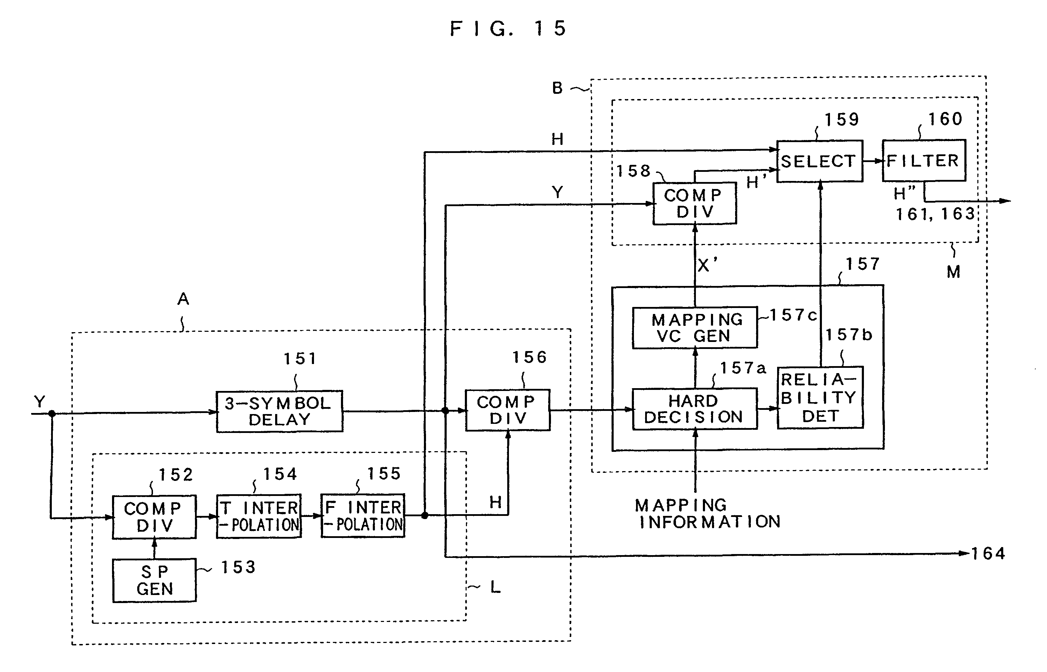

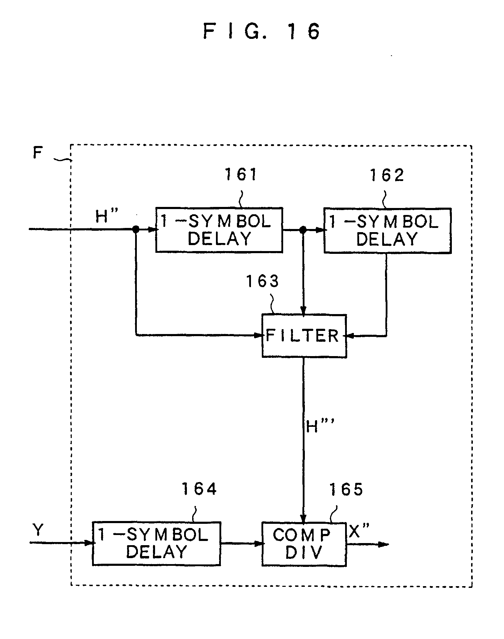

Next, an OFDM demodulator according to a seventh embodiment of the present invention will be described. Figs. 15 and 16 are structural views of the OFDM demodulator of the seventh embodiment. The OFDM demodulator includes a first equalizer A and a second equalizer B shown in Fig. 15 and a third equalizer F shown in Fig. 16.

The first equalizer A includes a first channel estimation block L, a three-symbol delay unit 151, and a second complex divider 156. The first channel estimation block L includes a first complex divider 152, an SP signal generator 153, a time direction linear interpolation circuit 154, and a frequency direction interpolation circuit 155.

The SP signal generator 153 generates a known SP signal. The first complex divider 152 complex-divides a scattered pilot signal SPn,k of received signal Yn,1 subjected to FFT by an output of the SP signal generator 153. The time direction linear interpolation circuit 154 interpolates an output of the first complex divider 152 in time direction. The frequency direction interpolation circuit 155 interpolates an output of the time direction linear interpolation circuit 154 in frequency direction so as to calculate a channel characteristic Hn,1. The second complex divider 156 complex-divides the received signal Yn,1 by the channel characteristic Hn,1 and thus outputs a mapping vector Xn,1.

The second equalizer B includes a hard decision block 157 and a second channel estimation block M. The hard decision block 157 is configured so as to include a hard decision unit 157a, a reliability detection block 157b, and a mapping vector generator 157c. The hard decision unit 157a hard-decides an output Xn,1 of the first equalizer A. The reliability detection block 157b detects reliability of result of hard decision. The mapping vector generator 157c calculates a mapping vector X'n,1 on a basis of result of decision of the hard decision unit 157a.

The second channel estimation block M is configured so as to include a third complex divider 158, a selection circuit 159 and a frequency direction filter 160. The third complex divider 158 complex-divides the received signal Yn,1 by the mapping vector X'n,1. The selection circuit 159 selects an output H'n,1 of the third complex divider 158 or the channel characteristic Hn,1 depending on an output of the reliability estimation block 157b. The frequency direction filter 160 filters an output of the selection circuit 159 and thus outputs a secondary channel characteristic H"n,l.

The third equalizer F includes one-symbol delay units 161 and 162 serving as cascade delay units, a time direction filter 163, an one-symbol delay unit 164, and a fourth complex divider 165. The cascade symbol delay units delay a channel characteristic H"n,1 obtained by the second equalizer B by one symbol and two symbols, respectively. The time direction filter 163 interpolates outputs H"n-2,1 and H"n-1,1 of the cascade symbol delay units and a channel characteristic H"n,1 not subjected to symbol delay in time direction and thus outputs a tertiary channel characteristic H'''n-1,1. The one-symbol delay unit 164 delays the received signal Yn,1 supplied from the first equalizer A by one symbol. The fourth complex divider 165 complex-divides a signal Yn-1,1 which is obtained by delaying a received signal by one symbol by an output H'''n-1,1 of the time direction filter 163.

In accordance with the present embodiment, the one-symbol delay units 161 and 162 delay the channel characteristic outputted from the frequency direction filter 160 in the second equalizer B by one symbol, respectively. Then, the time direction filter 163 calculates a channel characteristic at a symbol position again from channel characteristics of prior and subsequent symbols at the same carrier position and the channel characteristic at corresponding symbol position. In accordance with the present embodiment, a channel characteristic is calculated by using the following formula (4):

$$H\,(n\text{-}1,k) = [H\,(n\text{-}2,k) + 2H\,(n\text{-}1,k) + H\,(n,k)]/4 \tag{4}.$$

A signal subjected to FFT is delayed by one symbol at the one-symbol delay unit 164 in order to make such process correspond to a delay time.

As described above, in accordance with the above-described embodiments, received data subjected to demodulation is hard-decided. Then, the received data subjected to FFT is divided by using a mapping vector subjected to hard decision. As a result, a channel characteristic can be newly calculated.

Further, in accordance with the above-described embodiments, the channel characteristic can be calculated by using all of the received data which are determined as reliable. Thus, as compared to conventional estimation of channel only by a scattered pilot signal, precision in estimation of channel characteristic is significantly improved especially in an environment of receiving a mobile.

Moreover, in accordance with the above-described embodiments, a threshold which is determined as reliable can be changed for each mapping. For this reason, even in a case of, e.g., single hierarchy of QPSK, it may be considered that a scattered pilot signal, a continual pilot signal, a transmission parameter signal, and an ancillary information signal are scattered in a QPSK signal. Thus, reliability of channel characteristic is higher as compared to a case that only QPSK is provided.

In Japanese ISDB-T system, signals of QPSK, 16QAM and 64QAM are frequency-interleaved as synchronous signals. In a case of 16QAM, as QPSK is frequency-interleaved. □Thereby at a time of decoding a signal, a pilot signal with high reliability of QPSK is considered to be included. Accordingly, reliability in estimation of channel is improved as compared to a case that only 16QAM is provided.

Similarly, in a case of 64QAM, pilot signals of 16QAM and QPSK are considered to be included. Accordingly, reliability in estimation of channel is improved as compared to a case that only 64QAM is provided.

Although the present invention exhibits sufficient effects in a case of single hierarchy, the present invention exhibits effects to improve a performance of 64QAM especially when a frequency interleaving is performed and various mappings exist.

It is to be understood that although the present invention has been described with regard to preferred embodiments thereof, various other embodiments and variants may occur to those skilled in the art, which are within the scope of the invention, and such other embodiments and variants are intended to be covered by the following claims.

**Claims**

1. A method for demodulating a signal used in an orthogonal frequency division multiplex, known as OFDM, transmission system which modulates a plurality of carriers with their frequencies being orthogonal with each other for each symbol period so as to transmit digital information, wherein

   a scattered pilot signal SPn,k is placed at a carrier position so that a carrier number k satisfies k = 3 * (n mod 4) + 12p, where n is a symbol number, p is an integer number, and mod indicates a residue operation;
   continual pilot signals and transmission parameter signals are placed at specified carrier positions; and
   said scattered pilot signals and said continual pilot signals are modulated by specified amplitude and phase that are uniquely determined by said carrier number k of said carrier in a transmission band;
   said method comprising the following steps
   extracting a scattered pilot signal SPn,k from a received signal Yn,l, wherein l is an integer number, after FFT processing;
   estimating a channel characteristic Hn,1 by interpolating said scattered pilot signal in time direction and frequency direction;

reconstituting a mapping vector Xn,l of a transmission parameter signal, and a data signal placed at the respective carrier positions by complex-dividing said received signal Yn,l by the obtained channel characteristic Hn,l; the method **characterised by**:

calculating a primary mapping vector X'n,l at each carrier position by hard-deciding of said reconstituted mapping vector Xn,l;

deriving a primary channel characteristic H'n,l, by complex-dividing said received signal Yn,l by said mapping vector X'n,l;

filtering in frequency direction said channel characteristic H'n,l, to produce a secondary channel characteristic H"n,l; and

deriving a secondary mapping vector X"n,l by complex-dividing said received signal Yn,l by said secondary channel characteristic H"n,l, thereby decoding said data signal.

2. The method of claim 1, further comprising the steps of:

providing a reliability threshold for each type of mapping at a time of said hard decision; substituting said primary channel characteristic H'n,l for channel characteristic Hn,l at each carrier position, when said mapping vector is within said reliability threshold; calculating a secondary channel characteristic H"n,l by filtering resultant substituted channel characteristic H or H', in frequency direction; and

calculating a secondary mapping vector X"n,l by dividing said received signal Yn,l by said secondary channel characteristic H"n,l, thereby decoding said data signal.

3. The method of claim 2, wherein said reliability threshold is determined by Euclidean distances between said mapping vectors Xn,l and said predetermined mapping vector X' n,l.

4. The method of claim 1, further comprising the steps of:

calculating a secondary channel characteristic H"n,l by filtering said primary channel characteristic H'n,l in frequency direction;

reconstituting secondary mapping vectors X"n,l of a transmission parameter signal, and a data signal placed at the respective carriers by dividing said received signal Yn,l by secondary channel characteristic H"n,l;

calculating a tertiary mapping vector X'''n,l at each carrier position by hard-deciding said mapping vector X"n,l;

calculating a tertiary channel characteristic H'''n,l by complex-dividing said received signal Yn,1 by said mapping vector X'''n,1;

calculating a quaternary channel characteristic H''''n,1 by filtering said H'''n,1 in frequency direction; and

calculating a quaternary mapping vector X''''n,l by dividing said received signal Yn,1 by said quaternary channel characteristic H''''n,1, thereby decoding said data signal.

5. The method of claim 1, further comprising the steps of:

providing a first reliability threshold for each type of mapping at a time of said hard decision, substituting a primary channel characteristic H'n,l obtained by using signal points within the predetermined threshold for said channel characteristic Hn,1 at said carrier position, and filtering said channel characteristic H'n,1 in frequency direction, thereby calculating a secondary channel characteristic H"n,1;

reconstituting secondary mapping vectors X"n,l of a transmission parameter signal, and a data signal placed at the respective carrier positions by dividing said received signal Yn,l by said channel characteristic H"n,l;

calculating a tertiary mapping vector X'''n,l at each carrier position by hard-deciding said mapping vectors X"n,l;

providing a second reliability threshold for each type of mapping at a time of said hard decision, and substituting a tertiary channel characteristic H'''n,l obtained by using signal points within the predetermined threshold for said channel characteristic H"n,1 at said carrier position;

calculating a quaternary channel characteristic H''''n,1 by filtering said channel characteristic H'''n,1 in frequency direction; and

calculating a quaternary mapping vector X''''n,1 by dividing said received signal Yn,1 by said channel characteristic H''''n,l, thereby decoding said data signal.

6. The method according to any of claims 1 to 5, further comprising the following steps of:

obtaining a transmission parameter signal and a data signal placed at the respective carrier positions by utilizing said channel characteristics;
obtaining mapping vectors by hard-deciding the resultant signals; and
repeating obtaining new channel characteristic by utilizing said mapping vectors, thereby decoding said data signal.

7. The method of claim 1, further comprising the steps of:

calculating a secondary channel characteristic H"n,l by filtering said primary channel characteristic H'n,1 in frequency direction;
extracting a channel characteristic of said scattered pilot signal SPn,k from said secondary channel characteristic H"n,1;
calculating a tertiary channel characteristic H'''n,1 by interpolating said extracted channel characteristic in time direction and frequency direction; and
calculating a mapping vector X"n,1 by dividing said received signal Yn,1 by said tertiary channel characteristic H'''n,l, thereby decoding said data signal.

8. The method of claim 1, further comprising the steps of:

calculating a secondary channel characteristic H"n,1 by filtering said primary channel characteristic H'n,1 in frequency direction;
delaying said secondary channel characteristic H"n,1 by two symbols, and from a channel characteristic H"n-2,1 delayed by two symbols and a channel characteristic H"n,1 without symbol delay, calculating a tertiary channel characteristic H'''n,1 of symbol between such symbols; and
calculating a secondary mapping vector X"n-1,1 by dividing said received signal Yn-1,1 by said tertiary channel characteristic H'''n-1,1, thereby decoding said data signal.

9. The method of claim 1 further comprising the steps of:

calculating a secondary channel characteristic H"n,1 by filtering said primary channel characteristic H'n,1 in frequency direction;
delaying said channel characteristic H"n,1 by one symbol and two symbols;
from said channel characteristic H"n-2,1 delayed by two symbols, said channel characteristic H"n-1,1 delayed by one symbol and a channel characteristic H"n,1 without symbol delay, calculating a tertiary channel characteristic H'''n-1,1 of symbol between such symbols; and
calculating a secondary mapping vector X"n-1,1 by dividing received signal Yn-1,1 obtained by delaying said received signal by one symbol by said H'''n-1,l, thereby decoding said data signal.

10. A demodulator for an orthogonal frequency division multiplex hereinafter mentioned as OFDM, transmission system which modulates a plurality of carriers with their frequencies being orthogonal with each other for each symbol period so as to transmit digital information, wherein:

a scattered pilot signal SPn,k is placed at a carrier position so that a carrier number k satisfies k = 3* (n mod 4) + 12p where n is a symbol number p is an integer number and mod indicates a residue operation;
continual pilot signals, and transmission parameter signals are placed at specified carrier positions; and
said scattered pilot signal and said continual pilot signals are modulated by specified amplitude and phase that are uniquely determined by the carrier number k of said carrier in a transmission band;

said demodulator comprising:

a first equalizer which equalizes a received OFDM signal Yn,l, wherein 1 indicates an integer number, by using said scattered pilot signal SPn,k, and which calculates a channel characteristic Hn,l and mapping vectors Xn,l of signals placed at the respective carriers; **characterised by**
a second equalizer which calculates a primary mapping vector X'n,l by hard decision of the mapping vector Xn,l obtained by said first equalizer A; which derives a primary channel characteristic H'n,l by complex dividing the received signal Y n,l by the mapping vector X'n,l; which derives a secondary channel characteristic H"n,l by filtering in the frequency direction the channel characteristic H'n,l; which re-equalizes said received signal Yn,l by using said secondary channel characteristic, H"n,l and which derives a secondary mapping vector. X"n,l by complex dividing the received signal Y n,l by the secondary channel characteristic H" n,l, thereby decoding the data signal.

**11.** The demodulator of claim 10, wherein said first equalizer comprises:

a first channel estimation block which has a scattered pilot signal generator which generates a known scattered pilot signal, a first complex divider which complex-divides said scattered pilot signal SPn,k of received signal Yn,l subjected to FFT by an output of said scattered pilot signal generator, a time direction interpolation block and a frequency direction interpolation block that interpolate an output of said first complex divider in time direction and frequency direction, respectively, so as to calculate a channel characteristic Hn,l; and
a second complex divider which complex-divides said received signal Yn,l by said channel characteristic Hn, 1 so as to output a mapping vector Xn,1, and

said second equalizer comprises:

a hard decision block which has a hard decision unit which hard-decides the output Xn,l of said first equalizer, a mapping vector generator which calculates a primary mapping vector X'n,l on the basis of decision result of said hard decision unit, and a reliability detection block which detects reliability of result of hard decision;
a second channel estimation block which has a third complex divider which complex-divides said received signal Yn,l by said primary mapping vector X'n,l, a selection circuit which selects one of an output H'n,1 of said third complex divider and said channel characteristic Hn,1 depending on an output of said reliability detection block, and a frequency direction filter which filters an output of said selection circuit; and
a fourth complex divider which complex-divides said received signal Yn,1 by said secondary channel characteristic H"n,1 outputted from said frequency direction filter so as to calculate a secondary mapping vector X"n,l.

**12.** The demodulator of claim 10, wherein said reliability detection block applies a reliability threshold to each type of mapping and determines whether or not the mapping vector Xn,l is within the reliability threshold; and
said selection circuit selects said primary channel characteristic H'n,l in case said the mapping vector is within the reliability threshold.

**13.** The demodulator of claim 12, wherein said reliability threshold is determined by Euclidean distances between said mapping vector Xn,l and said predetermined mapping vector X' n,l.

**14.** The demodulator of claim 10, further comprising:

a third equalizer which hard-decides a mapping vector X"n,l obtained at said second equalizer, which calculates a tertiary channel characteristic H'''n,l by using a tertiary mapping vector X'''n,l obtained by hard decision and said received signal Yn,1, which calculates a quaternary channel characteristic H''''n,l by filtering said channel characteristic H'''n,l in frequency direction, which re-equalizes said received signal Yn,l by using said channel characteristic H''''n,l, and which calculates a quaternary mapping vector X''''n,l.

**15.** The demodulator of claim 14, wherein said first equalizer comprises:

a first channel estimation block which has a scattered pilot signal generator which generates a known scattered pilot signal, a first complex divider which complex-divides said scattered pilot signal SPn,k of received signal Yn,l subjected to FFT by an output of said scattered pilot signal generator, a time direction interpolation block and a frequency direction interpolation block that interpolate an output of said first complex divider in time direction and frequency direction, respectively, so as to calculate a channel characteristic Hn,l; and
a second complex divider which complex-divides said received signal Yn,1 by said channel characteristic Hn, 1 so as to output a mapping vector Xn,1,

said second equalizer comprises:

a hard decision block which has a first hard decision unit which hard-decides an output Xn,l of said first equalizer, a first mapping vector generator which calculates a primary mapping vector X'n,1 of the output of said first hard decision unit, and a first reliability detection block which detects reliability result of said first hard decision unit;
a second channel estimation block which has a third complex divider which complex-divides said received signal Yn,l by said primary mapping vector X'n,l, a first selection circuit which selects an output H'n,1 of said third complex divider and said channel characteristic Hn,1 depending on an output of said reliability detection block, and a first frequency direction filter which filters an output of said first selection circuit; and
a fourth complex divider which calculates a secondary mapping vector X"n,1 by complex-dividing said received signal Yn,1 by said secondary channel characteristic H"n,1 outputted from said frequency direction first filter; and

   said third equalizer comprises:

a second hard decision block which has a second hard decision unit which hard-decides an output X"n,l of said second equalizer, a second mapping vector generator which calculates a mapping vector X'''n,l of an output of said second hard decision unit, and a second reliability detection block which detects reliability of result of hard decision;
a third channel estimation block which has a fifth complex divider which complex-divides said received signal Yn,1 by said mapping vector X'''n,1, a second selection circuit which selects one of an output H'''n,1 of said fifth complex divider and said channel characteristic H"n,1 depending on an output of said second reliability detection block, and a second frequency direction filter which filters an output of said second selection circuit; and
a sixth complex divider which calculates a quaternary mapping vector X''''n,1 by complex-dividing said received signal Yn,1 by an output H''''n,1 of said second frequency direction filter.

16. The demodulator of claim 15, wherein said second reliability detection block applies a reliability threshold to each type of mapping and determines whether or not a mapping vector is within the reliability threshold, and
   said second selection circuit selects H'n,l or H'''n,l in case mapping vector X"n,l is within the reliability threshold.

17. The demodulator of any one of the claims 11 to 16, wherein a plurality of equalizers are provided such that a transmission parameter signal and a data signal that are placed at the respective carrier positions are obtained by utilizing said channel characteristic, the resultant signals are hard-decided so as to obtain mapping vectors, a new channel characteristic is obtained by using said mapping vectors and such process is repeated, and thereby said data signal is decoded.

18. The demodulator of claim 10, further comprising: a third equalizer which extracts a channel characteristic for said scattered pilot signal SPn,k from the channel characteristic H"n,1 obtained at said second equalizer, which interpolates said extracted channel characteristic in time and frequency directions, thereby calculating a tertiary channel characteristic H'''n,1, and which divides said received signal Yn,1 by said tertiary channel characteristic H'''n,l, thereby calculating a mapping vector X"n,l.

19. The demodulator according to claim 18, wherein said first equalizer comprises:

a first channel estimation block which has a scattered pilot signal generator which generates a known SP signal, a first complex divider which complex-divides said scattered pilot signal SPn,k of received signal Yn,1 subjected to FFT by an output of said SP signal generator, a time direction interpolation block and a frequency direction interpolation block that interpolate an output of said first complex divider in time direction and frequency direction, respectively, so as to calculate a channel characteristic Hn,1; and
a second complex divider which complex-divides said received signal Yn,1 by said channel characteristic Hn,1 so as to output a mapping vector Xn,1, and

   said second equalizer comprises:

a hard decision block which has a hard decision unit which hard-decides the output Xn,1 of said first equalizer, a mapping vector generator which calculates a primary mapping vector X'n,1 on the basis of decision result of said hard decision unit, and a reliability detection block which detects reliability of result of hard decision;
a second channel estimation block which has a third complex divider which complex-divides said received signal Yn,1 by said primary mapping vector X'n,1, a selection circuit which selects one of an output H'n,l of said third complex divider and said channel characteristic Hn,1 depending on an output of said reliability detection block, and a frequency direction filter which filters an output of said selection circuit and outputs a secondary channel charistic H"n,l; and

said third equalizer comprises:

a scattered pilot extraction unit which extracts a scattered pilot signal at a position of scattered pilot signal SPn,k by using the channel characteristic H"n,1 obtained by said second equalizer;
interpolation blocks in time and frequency directions which interpolate an output of said scattered pilot signal extraction unit in time and frequency directions so as to calculate a tertiary channel characteristic H'''n,l; and
a fourth complex divider which complex-divides said received signal Yn,l by said channel characteristic H'''n,l.

20. The demodulator of claim 10, further comprising:

a third equalizer which delays the channel characteristic H"n,1 obtained at said second equalizer by two symbols, which, from a channel characteristic H'''n-2,1 delayed by two symbols and the channel characteristic H'''n,1 without symbol delay, calculates a quaternary channel characteristic H''''n-1,1 for symbol between such symbols, and which divides said received signal Yn-1,1 by said channel characteristic H''''n-1,1, thereby calculating a secondary mapping vector X"n-1,1.

21. The demodulator of claim 20, wherein said first equalizer comprises:

a first channel estimation block which has a scattered pilot signal generator which generates a known scattered pilot signal, a first complex divider which complex-divides said scattered pilot signal SPn,k of received signal Yn,1 subjected to FFT by an output of said scattered pilot signal generator, a time direction interpolation block and a frequency direction interpolation block that interpolate an output of said first complex divider in time direction and frequency direction, respectively, so as to calculate a channel characteristic Hn,1; and
a second complex divider which complex-divides said received signal Yn,1 by said channel characteristic Hn,1 so as to output a mapping vector Xn,1;

said second equalizer comprises:

a hard decision block which has a hard decision unit which hard-decides an output Xn,l of said first equalizer, a mapping vector generator which calculates a primary mapping vector X'n,1 based on an output of said hard decision unit, and a reliability detection block which detects reliability result of hard decision; and
a second channel estimation block which has a third complex divider which complex-divides said received signal Yn,l by said primary mapping vector X'n,l, a selection circuit which selects one of an output H'n,l of said third complex divider and said channel characteristic Hn,l depending on an output of said reliability detection block, and a frequency direction filter which filters an output of said selection circuit so as to output a secondary channel characteristic H"n,1; and

said third equalizer comprises:

a two-symbol delay unit which delays the channel characteristic H"n,1 obtained by said second equalizer by two symbols;
a time direction filter block which interpolates in time direction an output H"n-2,1 of said two-symbol delay unit and the channel characteristic H"n,1 without symbol delay so as to obtain a tertiary channel characteristic H'''n-1,1; and
a fourth complex divider which complex-divides a signal Yn-1,1 which is obtained by delaying said received signal by one symbol by an output H'''n,1 of said time direction filter block.

22. The demodulator of claim 10, comprising:

a third equalizer which delays said channel characteristic H"n,1 obtained by said second equalizer by one symbol and two symbols respectively, which, from a channel characteristic H"n-1,l delayed by one symbol, a channel characteristic H"n-2,l delayed by two symbols and said channel characteristic H"n,1 without symbol delay, calculates a H'''n-1,1 for symbol between such symbols, and which divides Yn-1,1 obtained by delaying said received signal by one symbol by a tertiary channel characteristic H'''n-1,l, thereby calculating a secondary mapping vector X"n-1,l.

23. The demodulator of claim 22, wherein said first equalizer comprises:

a first channel estimation block which has a scattered pilot signal generator which generates a known scattered pilot signal, a first complex divider which complex-divides said scattered pilot signal SPn,k of received signal Yn,l subjected to FFT by an output of said scattered pilot signal generator, a time direction interpolation block and a frequency direction interpolation block that interpolate an output of said first complex divider in time direction and frequency direction, respectively, so as to calculate a channel characteristic Hn,1; and
a second complex divider which complex-divides said received signal Yn,1 by said channel characteristic Hn, 1 so as to output a mapping vector Xn,1;

said second equalizer comprises:

a hard decision block which has a hard decision unit which hard-decides an output Xn,1 of said first equalizer, a mapping vector generator which calculates a primary mapping vector X'n,1 based on an output of said hard decision unit, and a reliability detection block which detects reliability result of hard decision; and
a second channel estimation block which has a third complex divider which complex-divides said received signal Yn,1 by said primary mapping vector X'n,l, a selection circuit which selects one of an output H'n,1 of said third complex divider and said channel characteristic Hn,1 depending on an output of said reliability detection block, and a frequency direction filter which filters an output of said selection circuit so as to output a secondary channel characteristic H"n,1; and

said third equalizer comprises:

cascade symbol delay units which delay said secondary channel characteristic H"n,1 obtained by said second equalizer by one symbol and two symbols, respectively;
a time direction filter block which interpolates in time direction said channel characteristic H"n-2,1 and H"n-1,1 of said cascade symbol delay units and said channel characteristic H"n,1 without symbols delay so as to obtain a tertiary channel characteristic H'''n-1,1; and
a fourth complex divider which complex-divides a signal Yn-1,1 obtained by delaying said received signal by one symbol by said tertiary channel characteristic H'''n-1,1 outputted from of said time direction filter block.

## Patentansprüche

1.  Verfahren zum Demodulieren eines Signals, das in einem OFDM-Übertragungssystem mit orthogonaler Frequenzmultiplexierung verwendet wird, welches eine Vielzahl von Trägem, deren Frequenzen orthogonal zueinander sind, für jede Symbolperiode moduliert, um digitale Information zu übertragen, worin

    ein gestreutes Pilotsignal SPn,k an einer Trägerposition so angeordnet wird, dass eine Trägerzahl k k = 3 * (n mod 4) p 12p befriedigt, wobei n eine Symbolzahl, p eine ganze Zahl und mod eine Modulo-Operation darstellt;
    abfolgende Pilotsignale und Übertragungsparametersignale an spezifischen Trägerpositionen angeordnet werden; und
    die gestreuten Pilotsignale und die abfolgenden Pilotsignale durch eine spezifizierte Amplitude und Phase moduliert werden, die durch die Trägerzahlnummer k des Trägers in einem Übertragungsband einzigartig festgelegt sind;
    wobei das Verfahren die folgenden Schritte umfasst:

    Extrahieren eines gestreuten Pilotsignals SPn, k aus einem empfangenen Signal Yn,k, worin 1 eine ganze Zahl ist, nach einer FFT-Verarbeitung;
    Schätzen einer Kanalcharakteristik Hn,l durch Interpolieren des gestreuten Pilotsignals in Zeitrichtung und Frequenzrichtung;
    Wiederherstellen eines Mappingvektors XI,I eines Übertragungsparametersignals und eines Datensignals, das an den entsprechenden Trägerpositionen angeordnet ist, durch komplexes Dividieren des empfangenen Signals Yn,L durch die erhaltene Kanalcharakteristik Hn,l, wobei das Verfahren **gekennzeichnet ist durch**:

    Berechnen eines primären Mappingvektors X'n,l an jeder Trägerposition **durch** Hart-Entscheiden des rekonstituierten Mappingvektors Xn,l;
    Ableiten einer ersten Kanalcharakteristik H'n,l **durch** komplexes Dividieren des empfangenen Signals Yn, l **durch** den Mappingvektor X'n,l;
    Filtern der Kanalcharakteristik H'n,l, um in Frequenzrichtung eine zweite Kanalcharakteristik H"n,l zu erzeugen; und

Ableiten eines sekundären Mappingvektors X"n,l **durch** komplexes Dividieren des empfangenen Signals Yn,l **durch** die sekundäre Kanalcharakteristik H"n,l, wobei **dadurch** das digitale Signal decodiert wird.

**2.** Verfahren nach Anspruch 1, ferner umfassend die Schritte:

Bereitstellen eines Zuverlässigkeits-Schwellenwerts für jeden Typ des Mappings an einer Zeit der Hart-Entscheidung;
Substituieren der primären Kanalcharakteristik K'n,l für die Kanalcharakteristik Hn,l an jeder Trägerposition, wenn der Mappingvektor innerhalb des Zuverlässigkeits-Schwellenwertes ist;
Berechnen einer sekundären Kanalcharakteristik H"n,l durch Filtern der resultierenden, substituierten Kanalcharakteristik H oder H' in Frequenzrichtung, und
Berechnen eines sekundären Mappingvektors X"n,l durch Dividieren des empfangenen Signals Yn,l durch die sekundäre Kanalcharakteristik H"n,l, wobei dadurch das Datensignal decodiert wird.

**3.** Verfahren nach Anspruch 2, worin der Zuverlässigkeits-Schwellenwert durch Euclidische Abstände zwischen den Mappingvektoren Xn,l und dem vorgegebenen Mappingvektor X'n,l bestimmt wird.

**4.** Verfahren nach Anspruch 1, ferner umfassend die Schritte:

Berechnen einer sekundären Kanalcharakteristik H"n,l durch Filtern der primären Kanalcharakteristik H'n,l in Frequenzrichtung;
Wiederherstellen sekundärer Mappingvektoren X"n,l eines Übertragungsparametersignals und eines Datensignals, die an entsprechenden Trägem angeordnet sind, durch Dividieren des empfangenen Signals Yn,l durch die sekundäre Kanalcharakterist H"n,l;
Berechnen eines ternären Mappingvektors X'''n,l an jeder Trägerposition durch Hart-Entscheiden des Mappingvektors X",l;
Berechnen einer ternären Kanalcharakteristik H'''n,l durch komplexes Dividieren des empfangenen Signals Yn,l durch den Mappingvektor X'''n,l;
Berechnen einer quartemären Kanalcharakteristik H''''n,l durch Filtern von H'''n,l in Frequenzrichtung; und
Berechnen eines quartemären Mappingvektors X''''n,l durch Dividieren des empfangenen Signals Yn,l durch die quartemäre Kanalcharakteristik H''''n,l, wobei dadurch das Datensignal decodiert wird.

**5.** Verfahren nach Anspruch 1, ferner umfassend die Schritte:

Bereitstellen eines ersten Zuverlässigkeits-Schwellenwertes für jeden Typ von Mapping an einem Zeitpunkt der Hart-Entscheidung, Bilden einer primären Kanalcharakteristik H'n,l die erhalten wird, indem Signalpunkte innerhalb des vorgegebenen Schwellenwerts für die Kanalcharakteristik Hn,l an der Trägerposition verwendet wird und die Kanalcharakteristik H'n,l in Frequenzrichtung gefiltert wird, wodurch eine sekundäre Kanalcharakteristik H"n,l berechnet wird;
Wiederherstellen eines sekundären Mappingvektors X"n,l eines Übertragungsparametersignals und eines Datensignals, welche an den entsprechenden Trägerposititionen angeordnet sind, durch Dividieren des empfangenen Signals Yn,l durch die Kanalcharakteristik H"n,l;
Berechnen eines ternären Mappingvektors X'''n,l an jeder Trägerposition durch Hart-Entscheiden des Mappingvektors X"n,l;
Bereitstellen eines zweiten Zuverlässigkeits-Schwellenwertes für jeden Typ des Mappings an einem Zeitpunkt der Hart-Entscheidung und Substituieren einer ternären Kanalcharakteristik H'''n,l, die durch Verwendung von Signalpunkten in dem vorgegebenen Schwellenwert erhalten wird, für die Kanalcharakteristik H"n,l an der Trägerposition;
Berechnen einer quartemären Kanalcharakteristik H''''n,l durch Filtern der Kanalcharakteristik H'''n,l in Frequenzrichtung; und
Berechnen eines quartemären Mappingvektors X''''n,l durch Dividieren des empfangenen Signals durch die Kanalcharakteristik H''''n,l, wobei dadurch das Datensignal decodiert wird.

**6.** Verfahren nach einem der Ansprüche 1 bis 5, ferner umfassend die folgenden Schritte:

Erhalten eines Übertragungsparametersignals und eines Datensignals, die an entsprechenden Trägerpositionen angeordnet sind, durch Verwendung der Kanalcharakteristiken;
Erhalten von Mappingvektoren durch Hart-Entscheiden der resultierenden Signale; und

Wiederholen der Fassung der neuen Kanalcharakteristik durch Verwendung der Mappingvektoren, wobei dadurch das Datensignal decodiert wird.

7.  Verfahren nach Anspruch 1, ferner umfassend die Schritte:

Berechnen einer sekundären Kanalcharakteristik H"n,l durch Filtern der primären Kanalcharakteristik H'n,l in Frequenzrichtung;
Extrahieren einer Kanalcharakteristik des gestreuten Pilotsignals SPn,k von der sekundären Kanalcharakteristik H"n,l;
Berechnen einer ternären Kanalcharakteristik H'''n,l durch Interpolieren der extrahierten Kanalcharakteristik in der Zeitrichtung und der Frequenzrichtung; und
Berechnen eines Mappingvektors X"n,l durch Dividieren des empfangenen Signals Yn,l durch die ternäre Kanalcharakteristik H'''n,l, wobei dadurch das Datensignal decodiert wird.

8.  Verfahren nach Anspruch 1, ferner umfassend die Schritte:

Berechnen einer sekundären Kanalcharakteristik H"n,l durch Filtern der primären Kanalcharakteristik H'n,l in Frequenzrichtung;
Verzögern der sekundären Kanalcharakteristik H"n,l, um zwei Symbole und Berechnen aus einer Kanalcharakteristik H"n-2,l, die um zwei Symbole verzögert ist, und einer Kanalcharakteristik H"n,l ohne Symbolverzögerung, eine ternäre Kanalcharakteristik H'''n,l eines Symbols zwischen diesen Symbolen; und
Berechnen eines sekundären Mappingvektors X"n-1,l durch Dividieren des empfangenen Signals Yn-1,l durch die ternäre Kanalcharakteristik H'''n-1,l, wobei dadurch das Datensignal decodiert wird.

9.  Verfahren nach Anspruch 1, ferner umfassend die Schritte:

Berechnen einer sekundären Kanalcharakteristik H"n,l durch Filtern der primären Kanalcharakteristik H'n,l in Frequenzrichtung;
Verzögern der Kanalcharakteristik H"n,l um ein Symbol und zwei Symbole;
Berechnen aus der Kanalcharakteristik H"n-2,l, die um zwei Symbole verzögert ist, der Kanalcharakteristik H"n-1,l, die um ein Symbol verzögert ist, und einer Kanalcharakteristik H"n,l ohne Symbolverzögerung, eine temäre Kanalcharakteristik H'''n-1,l eines Symbols zwischen diesen Symbolen, und
Berechnen eines sekundären Mappingvektors X"n-1,l durch Dividieren des empfangenen Signals Yn-1,l, das durch Verzögerung des empfangenen Signals um ein Symbol erhalten worden ist, um H'''n-1,l, wobei dadurch das Datensignal decodiert wird.

10. Decoder für ein OFDM-Übertragungssystem mit orthogonaler Frequenzmultiplexierung, welches eine Vielzahl von Trägem, deren Frequenzen orthogonal zueinander sind, für jede Symbolperiode moduliert, um digitale Information zu übertragen, worin ein gestreutes Pilotsignal SPn,k an einer Trägerposition angeordnet wird, so dass eine Trägerzahl k k = 3* (n mod 4) + 12p befriedigt, wobei n eine Symbolzahl, p eine ganze Zahl und mod eine Modulo-Operation darstellt;
abfolgende Pilotsignale und Übertragungsparametersignale an spezifizierten Trägerpositionen angeordnet werden; und
das gestreute Pilotsignal und die abfolgenden Pilotsignale durch spezifizierte Amplitude und Phase moduliert werden, die durch die Trägerzahl k des Trägers in einem Übertragungsband einzigartig festgelegt sind;
wobei der Demodulator umfasst:

einen ersten Entzerrer, der ein empfangenes OFDM-Signal Yn,l, wobei 1 eine ganze Zahl ist, durch Verwendung des gestreuten-Pilotsignals SPn,k entzerrt und eine Kanalcharakteristik Hn,l und Mappingvektoren Xn,l von Signalen berechnet, die an den entsprechenden Trägem angeordnet sind, **gekennzeichnet durch**
einen zweiten Entzerrer, der einen primären Mappingvektor X'n,l **durch** eine Hart-Entscheidung des Mappingvektors Xn,l berechnet, der **durch** den ersten Entzerrer A erhalten wird, der eine primäre Kanalcharakteristik H'n,l **durch** komplexes Dividieren des empfangenen Signals Yn,l **durch** den Mappingvektor X'n,l ableitet, wodurch eine sekundäre Kanalcharakteristik H"n,l **durch** Filtern in Frequenzrichtung der Kanalcharakteristik H'n,l abgeleitet wird, wodurch das empfangene Signal Yn,l **durch** Verwendung der sekundären Kanalcharakteristik H"n,l zurückentzerrt wird, und wodurch ein sekundärer Mappingvektor X"n,l **durch** komplexes Dividieren des empfangenen Signals Yn,l **durch** die sekundäre Kanalcharakteristik H"n,l abgeleitet wird, wobei **dadurch** das Datensignal decodiert wird.

EP 1 313 282 B1

**11.** Demodulator nach Anspruch 10, worin der erste Entzerrer umfasst:

einen ersten Kanalschätzungsblock, der einen Generator für ein gestreutes Pilotsignal hat, der ein bekanntes gestreutes Pilotsignal erzeugt, einen ersten komplexen Dividierer, der das gestreute Pilotsignal SPn,k des empfangenen Signals Yn,l, welches FFT unterworfen ist, durch einen Ausgangs des Generators für das gestreute Pilotsignal komplex dividiert, einen Zeitrichtungs-Interpolationsblock und einen Frequenzrichtungs-Interpolationsblock hat, die einen Ausgang des ersten komplexen Dividierers in Zeitrichtung bzw. Frequenzrichtung interpolieren, um eine Kanalcharakteristik Hn,l zu berechnen; und
einen zweiten komplexen Dividierer, der das empfangene Signal Yn,l durch die Kanalcharakteristik Hn,l komplex dividiert, um einen Mappingvektor Xn,l auszugeben, und wobei der zweite Entzerrer umfasst:

einen Hart-Entscheidungsblock, der eine Hart-Entscheidungseinheit, die den Ausgang Xn,l des ersten Entzerrers hart entscheidet, einen Mappingvektorgenerator, der einen primären Mappingvektor X'n,l auf der Basis des Entscheidungsresultats der Hart-Entscheidungseinheit berechnet, und einen Zuverlässigkeits-Detektionsblock hat, welcher die Zuverlässigkeit des Resultats der Hart-Entscheidung detektiert;
einen zweiten Kanalschätzungsblock, der einen dritten komplexen Dividierer, der das empfangene Signal Yn,l durch den primären Mappingvektor X'n,l komplex dividiert, eine Auswahlschaltung, die einen von den Ausgängen H'n,l des dritten komplexen Dividierers und der Kanalcharakteristik Hn,l in Abhängigkeit von einem Ausgang des Zuverlässigkeits-Detektionsblocks auswählt, und einen Frequenzrichtungsfilter, der einen Ausgang der Auswahlschaltung filtert; und
einen vierten komplexen Dividierer, der das empfangene Signal Yn,l durch die sekundäre Kanalcharakteristik H"n,l komplex dividiert, die von dem Frequenzrichtungsfilter ausgegeben wird, um einen sekundären Mappingvektor X"n,l zu berechnen.

**12.** Demodulator nach Anspruch 10, worin der Zuverlässigkeits-Detektionsblock einen Zuverlässigkeits-Schwellenwert auf jeden Typ von Mapping anwendet und bestimmt, ob der Mappingvektor Xn,l innerhalb des Zuverlässigkeits-Schwellenwertes ist oder nicht; und
die Auswahlschaltung die primäre Kanalcharakteristik H'n,l auswählt, wenn der Mappingvektor in dem Zuverlässigkeits-Schwellenwert ist.

**13.** Demodulator nach Anspruch 12, worin der Zuverlässigkeits-Schwellenwert durch die Euclidischen Abstände zwischen dem Mappingvektor Xn,l und dem vorgegebenen Mappingvektor X'n,l bestimmt ist.

**14.** Demodulator nach Anspruch 10, ferner umfassend:

einen dritten Entzerrer, der einen Mappingvektor X"n,l der an dem zweiten Entzerrer erhalten wird, hart entscheidet, wodurch eine ternäre Kanalcharakteristik H'''n,l durch Verwendung eines ternären Mappingvektors X'''n,l durch Verwendung eines ternären Mappingvektors X'''n,l, der durch die Hart-Entscheidung erhalten wird, und des empfangenen Signals Yn,l berechnet, wodurch eine quartemäre Kanalcharakteristik H''''n,l durch Filtern der Kanalcharakteristik H'''n,l in Frequenzrichtung berechnet wird, wodurch das empfangene Signal Xn,l durch Verwendung der Kanalcharakteristik H''''n,l zurückentzerrt wird und wodurch ein quarternärer Mappingvektor X''''n,l berechnet wird.

**15.** Demodulator nach Anspruch 14, worin der erste Entzerrer umfasst:

einen ersten Kanalschätzungsblock, der einen Generator für ein gestreutes Pilotsignal, welcher ein bekanntes gestreutes Pilotsignal erzeugt, einen ersten komplexen Dividierer, der das gestreute Pilotsignal SPn,k des empfangenen Signals Yn,l, das FFT unterworfen ist, durch einen Ausgang des Generators für das gestreute Pilotsignal komplex dividiert, einen Zeitrichtungs-Interpolationsblock und einen Frequenzrichtung-Interpolationsblock hat, die einen Ausgang des ersten komplexen Dividierers in Zeitrichtung bzw. Frequenzrichtung interpolieren, um eine Kanalcharakteristik Hn,l zu berechnen; und
einen zweiten komplexen Dividierer, der das empfangene Signal Yn,l durch die Kanalcharakteristik Hn,l komplex dividiert, um einen Mappingvektor Xn,l auszugeben,

wobei der zweite Entzerrer umfasst:

einen Hart-Entscheidungsblock, der eine erste Hart-Entscheidungseinheit, die einen Ausgang Xn,l des ersten Entzerrers hart entscheidet, einen ersten Mappingvektorgenerator, der einen primären Mappingvektor X'n,l des Ausgangs der ersten Hart-Entscheidungseinheit berechnet, und einen ersten Zuverlässigkeits-Entscheidungsblock hat, der das Zuverlässigkeitsresulat der ersten Hart-Entscheidungseinheit feststellt;

einen zweiten Kanalschätzungsblock, der einen dritten komplexen Dividierer, der das empfangene Signal Yn,l durch den primären Mappingvektor X'n,l komplex dividiert, eine erste Auswahlschaltung, die einen Ausgang H'n,l des dritten komplexen Dividierers und die Kanalcharakteristik Hn,l, die nach dem Ausgang des Zuverlässigkeits-Detektionsblocks auswählt, und einen ersten Frequenzrichtungsfilter hat, der einen Ausgang der ersten Auswahlschaltung filtert; und

einen vierten komplexen Dividierer, der einen sekundären Mappingvektor X''n,l durch komplexes Dividieren des empfangenen Signals Yn,l durch die sekundäre Kanalcharakteristik H''n,l berechnet, die von dem ersten Frequenzrichtungsfilter ausgegeben wird; und

wobei der dritte Entzerrer umfasst:

einen zweiten Hart-Entscheidungsblock, der eine zweite Hart-Entscheidungseinheit, die einen Ausgang X''n,l des zweiten Entzerrers hart entscheidet, einen zweiten Mappingvektorgenerator, der einen Mappingvektor X'''n,l von einem Ausgang der zweiten Hart-Entscheidungseinheit berechnet, und einen zweiten Zuverlässigkeits-Detektorblock hat, der die Zuverlässigkeit des Resultats der Hart-Entscheidung feststellt;

einen dritten Kanalschätzungsblock, der einen fünften komplexen Dividierer, der das empfangene Signal Yn,l durch den Mappingvektor X'''n,l komplex dividiert, eine zweite Auswahlschaltung, die einen von den Ausgängen H'''n,l des fünften komplexen Dividierers und der Kanalcharakteristik H''n,l in Abhängigkeit von dem Ausgang des zweiten Zuverlässigkeits-Detektionsblocks auswählt, und einen zweiten Frequenzrichtungsfilter hat, der einen Ausgang der zweiten Auswahlschaltung filtert; und

einen sechsten komplexen Dividierer, der einen quartemären Mappingvektor X''''n,l durch komplexes Dividieren des empfangenen Signals Yn,l durch einen Ausgang H''''n,l des zweiten Frequenzrichtungsfilters berechnet.

16. Demodulator nach Anspruch 15, worin der zweite Zuverlässigkeits-Detektionsblock einen Zuverlässigkeits-Schwellenwert zu jedem Typ des Mappings anwendet und feststellt, ob ein Mappingvektor innerhalb des Zuverlässigkeits-Schwellenwertes ist oder nicht, und wobei

die zweite Auswahlschaltung H'n,l oder H'''n,l auswählt, wenn der Mappingvektor X''n,l in dem Zuverlässigkeits-Schwellenwert ist.

17. Demodulator nach einem der Ansprüche 11 bis 16, worin eine Vielzahl von Entzerrern vorgesehen ist, so dass ein Übertragungsparametersignal und ein Datensignal, die an entsprechenden Trägerpositionen angeordnet sind, durch Verwendung der Kanalcharakteristik erhalten werden, wobei die resultierenden Signale hart entschieden werden, um Mappingvektoren zu erhalten, wobei eine neue Kanalcharakteristik durch Verwendung der Mappingvektoren erhalten wird und das Verfahren wiederholt wird, und wobei dadurch das Datensignal decodiert wird.

18. Demodulator nach Anspruch 10, ferner umfassend:

einen dritten Entzerrer, der eine Kanalcharakteristik des gestreuten Pilotsignals SPn,k aus der Kanalcharakteristik H''n,l, die an dem zweiten Entzerrer erhalten wird, extrahiert, wobei die extrahierte Kanalcharakteristik in Zeit- und Frequenzrichtung interpoliert wird, wodurch eine ternäre Kanalcharakteristik H'''n,l erhalten wird und wodurch das empfangene Signal Yn,l durch die ternäre Kanalcharakteristik H'''n,l dividiert wird, wobei ein Mappingvektor X''n,l berechnet wird.

19. Demodulator nach Anspruch 18, worin der erste Entzerrer umfasst:

einen ersten Kanalschätzungsblock, der einen Generator für gestreute Pilotsignale, der ein bekanntes SP-Signal erzeugt, einen ersten komplexen Dividierer, der das gestreute Pilotsignal SPn,k des empfangenen Signals Yn,l, das FFT unterworfen ist, durch einen Ausgang des SP-Signalgenerators komplex dividiert, einen Zeitrichtungs-Interpolationsblock und einen Frequenzrichtungs-Interpolationsblock hat; die einen Ausgang des ersten komplexen Dividierers in Zeitrichtung bzw. Frequenzrichtung interpolieren, um eine Kanalcharakteristik Hn,l zu berechnen; und

einen zweiten komplexen Dividierer, der das empfangene Signal Yn,l durch die Kanalcharakteristik Hn,l komplex dividiert, um einen Mappingvektor Xn,l auszugeben, und wobei der zweite Entzerrer umfasst:

einen Hart-Entscheidungsblock, der eine harte Entscheidungseinheit, die den Ausgang Xn,l des ersten Entzerrer hart entscheidet, einen Mappingvektorgenerator, der einen primären Mappingvektor X'n,l auf der Basis des Entscheidungsresultats der Hart-Entscheidungseinheit berechnet, und einen Zuverlässigkeits-Detektionsblock hat, der die Zuverlässigkeit des Resultats der Hart-Entscheidung erfasst;

einen zweiten Kanalschätzungsblock, der einen dritten komplexen Dividierer, der das empfangene Signal Yn,l durch den primären Mappingvektor X'n,l komplex dividiert, eine Auswahlschaltung, die einen der Ausgänge H'n,l des ersten komplexen Dividierers und der Kanalcharakteristik Hn,l in Abhängigkeit von dem Ausgang des Zuverlässigkeits-Detektionsblocks auswählt, und einen Frequenzrichtungsfilter hat, der einen Ausgang der Auswahlschaltung filtert und eine sekundäre Kanalcharakteristik H"n,l ausgibt und wobei

der dritte Entzerrer umfasst:

eine Extraktionseinheit für gestreute Pilotsignale, die ein gestreutes Pilotsignal an einer Position des gestreuten Pilotsignals SPn,k unter Verwendung der Kanalcharakteristik H"n,l, die von dem zweiten Entzerrer erhalten wird, extrahiert;

Interpolationsblock in Zeit- und Frequenzrichtung, die einen Ausgang der Extraktionseinheit für das gestreute Pilotsignal in Zeit- und Frequenzrichtung interpoliert, um eine ternäre Kanalcharakteristik H'''n,l zu berechnen; und einen vierten komplexen Dividierer, der das empfangene Signal Yn,l durch die Kanalcharakteristik H'''n,l komplex dividiert.

**20.** Demodulator nach Anspruch 10, ferner umfassend:

einen dritten Entzerrer, der die Kanalcharakteristik H"n,l, die an dem zweiten Entzerrer erhalten wird, um zwei Symbole verzögert, wodurch aus einer Kanalcharakteristik H'''n-2,l, die um zwei Symbole verzögert ist, und der Kanalcharakteristik H'''n,l ohne Symbolverzögerung eine quarternäre Kanalcharakteristik H''''n-1,l für ein Symbol zwischen diesen Symbolen berechnet wird, und der das empfangene Signal Yn-1,l durch die Kanalcharakteristik H''''n-1,l dividiert, um dadurch einen sekundären Mappingvektor X"n-1,l zu berechnen.

**21.** Demodulator nach Anspruch 20, worin der erste Entzerrer umfasst:

einen ersten Kanalschätzungsblock, der einen Generator für ein gestreutes Pilotsignal, der ein bekanntes, gestreutes Pilotsignal erzeugt, einen ersten komplexen Dividierer, der das gestreute Pilotsignal SPn,k des empfangenen Signals Yn,l, das FFT unterworfen ist, durch einen Ausgang des Generators für das gestreute Pilotsignal komplex dividiert, einen Zeitrichtungs-Interpolationsblock und einen Frequenzrichtungs-Interpolationsblock hat, die einen Ausgang des ersten komplexen Dividierers in Zeitrichtung bzw. Frequenzrichtung interpolieren, um eine Kanalcharakteristik Hn,l zu berechnen; und

einen zweiten komplexen Dividierer, der das empfangene Signal Yn,l durch die Kanalcharakteristik Hn,l komplex dividiert, um einen Mappingvektor Xn,l auszugeben;

wobei der zweite Entzerrer umfasst:

einen Hart-Entscheidungsblock, der eine Hart-Entscheidungseinheit, die einen Ausgang Xn,l des ersten Entzerrers hart entscheidet, einen Mappingvektorgenerator, der einen primären Mappingvektor X'n,l auf der Basis eines Ausgangs der Hart-Entscheidungseinheit berechnet, und einen Zuverlässigkeits-Detektionsblock hat, der das Zuverlässigkeitsresultat der Hart-Entscheidung feststellt; und

einen zweiten Kanalschätzungsblock, der einen dritten komplexen Dividierer, der das empfangene Signal Yn, l durch den primären Mappingvektor Xn,l komplex dividiert, eine Auswahlschaltung, die einen der Ausgänge H'n,l des dritten komplexen Dividierers und der Kanalcharakteristik Hn,l in Abhängigkeit von einem Ausgang des Zuverlässigkeits-Detektionsblocks auswählt, und einen Frequenzrichtungsfilter hat, der einen Ausgang der Auswahlschaltung filtert, um eine sekundäre Kanalcharakteristik H"n,l auszugeben; und wobei der dritte Entzerrer umfasst:

eine Zwei-Symbol-Verzögerungseinheit, die die Kanalcharakteristik H"n,l, die von dem zweiten Entzerrer erhalten wird, um zwei Symbole verzögert;

einen Zeitrichtungs-Filterblock, der in Zeitrichtung einen Ausgang H"n-2,1 der Zwei-Symbol-Verzögerungseinheit und die Kanalcharakteristik H"n,l ohne Symbolverzögerung interpoliert, um eine ternäre Kanalcharakteristik H'''n-1,l zu erhalten; und

einen vierten komplexen Dividierer, der ein Signal Yn-1,l komplex dividiert, welches durch Verzögerung

EP 1 313 282 B1

des empfangenen Signals um ein Signal erhalten wird, durch einen Ausgang H'''n,l des Zeitrichtungs-Filterblocks komplex dividiert.

**22.** Demodulator nach Anspruch 10, umfassend:

einen dritten Entzerrer, der die Kanalcharakteristik H"n,l, die durch den zweiten Entzerrer erhalten wird, um ein Symbol bzw. zwei Symbole verzögert, wodurch aus einer Kanalcharakteristik H"n-1,l, die um ein Symbol verzögert ist, einer Kanalcharakteristik H"n-2,l, die um zwei Symbole verzögert ist, und der Kanalcharakteristik H"n,l ohne Symbolverzögerung ein H'''n-1,l für ein Symbol zwischen diesen Symbolen berechnet wird, und wodurch Yn-1,l, welches durch Verzögerung des empfangenen Signals um ein Symbol erhalten wird, durch eine ternäre Kanalcharakteristik H'''n-1,l dividiert wird, wodurch ein sekundärer Mappingvektor X"n-1,l berechnet wird.

**23.** Demodulator nach Anspruch 22, worin der erste Entzerrer umfasst:

einen ersten Kanalschätzungsblock, der einen Generator für ein gestreutes Pilotsignal, die ein bekanntes gestreutes Pilotsignal erzeugt, einen ersten komplexen Dividierer, der das gestreute Pilotsignal SPn,k des empfangenen Signals Yn,l, das FFT unterworfen ist, durch einen Ausgang des Generators für das gestreute Pilotsignal komplex dividiert, einen ersten Zeitrichtungs-Interpolationsblock und einen Frequenzrichtung-Interpolationsblock hat, die einen Ausgang des ersten komplexen Dividierers in Zeitrichtung bzw. Frequenzrichtung interpolieren, um eine Kanalcharakteristik Hn,l zu berechnen; und
einen zweiten komplexen Dividierer, der das empfangene Signal Xn,l durch die Kanalcharakteristik Hn,l komplex dividiert, um einen Mappingvektor Xn,l auszugeben;

wobei der zweite Entzerrer aufweist:

einen Hart-Entscheidungsblock, der eine Hart-Entscheidungseinheit, die einen Ausgang Xn,l des ersten Entzerrers hart entscheidet, einen Mappingvektorgenerator, der einen primären Mappingvektor X'n,l auf der Basis eines Ausgangs der Hart-Entscheidungseinheit berechnet, und einen Zuverlässigkeits-Detektionsblock hat, der das Zuverlässigkeitsresultat der Hart-Entscheidung feststellt; und
einen zweiten Kanalschätzungsblock, der einen dritten komplexen Dividierer, der das empfangene Signal Yn, l durch den primären Mappingvektor X'n,l dividiert, eine Auswahlschaltung, die entweder einen Ausgang H'n, l des dritten komplexen Dividierers oder die Kanalcharakteristik Hn,l in Abhängigkeit von einem Ausgang des Zuverlässigkeits-Detektionsblocks auswählt, und einen Frequenzrichtungsfilter hat, der einen Ausgang der Auswahlschaltung filtert, um eine sekundäre Kanalcharakteristik H"n,l auszugeben; und wobei der dritte Entzerrer umfasst:

Kaskaden-Symbolverzögerungseinheiten, die sekundäre Kanalcharakteristik H"n,l, die von dem zweiten Entzerrer erhalten wird, um ein Symbol bzw. zwei Symbole verzögern;
einen Zeitrichtungs-Filterblock, der in Zeitrichtung die Kanalcharakteristik H"n-2,1 und H"n-1,l der Kaskaden-Symbolverzögerungseinheit und die Kanalcharakteristik H"n,l ohne Symbolverzögerung interpoliert, um eine ternäre Kanalcharakteristik H'''n-1,l zu erhalten; und

einen vierten komplexen Dividierer, der ein Signal Yn-1,l, das durch Verzögern des empfangenen Signals um ein Symbol erhalten wird, durch die ternäre Kanalcharakteristik H'''n-1,l komplex dividiert, die von dem ersten Zeitrichtungs-Filterblock ausgegeben wird.

**Revendications**

**1.** Procédé de démodulation d'un signal utilisé dans le système de transmission multiplexé par répartition des fréquences orthogonales, qui module une pluralité de porteuses avec leurs fréquences orthogonales l'une avec l'autre, pour chaque période symbole pour transmettre information digitale, où

- un signal pilote dispersé SPn,k est disposé à une position de porteuse de sorte qu'un nombre de porteuse k satisfait K+ 3 * (n mode 4) + 12p, où n est un nombre symbole, p est un nombre entier et mode indique une opération à rest;
- des signaux pilotes continus et des signaux à paramètres de transmission sont placés aux positions de por-

**21**

teuses spécifiées; et

- lesdits signaux pilotes dispersés et lesdits signaux pilotes continus sont modulés par l'amplitude spécifiée et la phase qui sont uniquement déterminées par ledit nombre de porteuse k de ladite porteuse dans une bande de transmission;
- ledit procédé comprenant les pas suivants:

  - extrayant un signal pilote dispersé SPn,k d'un signal reçu Yn,l où 1 est un nombre entier après la transformation FFT
  - estimant une caractéristique de canal Hn,l par l'interpolation dudit signal pilote dispersé dans les directions de temps et de fréquence;
  - reconstituant un vecteur de représentation Xn,l d'un signal à paramètres de transmission et un signal de données, placés aux positions de porteuses respectives par la division complexe dudit signal reçu Yn,l avec la caractéristique de canal obtenue Xn,l; le procédé est **caractérisé en ce que**:

    - calculant un vecteur de représentation primaire X'n,l à chaque position de porteuse par la décision dudit vecteur de représentation reconstitué Xn,l;
    - obtenant une caractéristique de canal primaire X'n,l par la division complexe dudit signal reçu Yn,l avec ledit vecteur de représentation X'n,l, filtrant ladite caractéristique de canal H'n,l pour produire dans la direction de fréquence une caractéristique de canal secondaire H"n,l; et
    - obtenant un vecteur de représentation secondaire X"n,l par la division complexe dudit signal reçu Yn, l avec ladite caractéristique de canal secondaire H"n,l, par cela décodant ledit signal de données.

2. Procédé de la revendication 1, comprenant encore les pas de:

- prévoyant un seuil de sûreté pour chaque type d'application à un temps de ladite décision permanente; substituant ladite caractéristique de canal primaire H'n,l pour la caractéristique de canal Hn.l à chaque position de porteuse, quand ledit vecteur de représentation est dans le cadre dudit seuil de sûreté; calculant une caractéristique de canal secondaire H"n,l filtrant la caractéristique de canal substituant, résultante h ou H' dans la direction de fréquence;
- calculant un vecteur de représentation secondaire X"n,l par la division dudit signal reçu Yn,l à ladite caractéristique de canal secondaire H"n,l par cela décodant ledit signal de données.

3. Procédé de la revendication 2, où ledit seuil de sûreté est déterminé par distances euclidiennes entre lesdits vecteurs de représentation Xn,l et ledit vecteur de représentation prédéterminé X'n,l.

4. Procédé de la revendication 1, comprenant encore les pas de:

- calculant une caractéristique de canal secondaire H"n,l par le filtrage de ladite caractéristique de canal primaire H'n,l dans la direction de fréquence;
- reconstituant des vecteurs de représentation secondaires X"n,l à un signal à paramètres de transmission et à un signal de données, placés aux porteuses respectives par la division dudit signal reçu Yn,l avec la caractéristique de canal secondaire H"n,l;
- calculant un vecteur de représentation tertiaire X'''n,l à chaque position de porteuse par la décision permanente dudit vecteur de représentation X"n,l;
- calculant une caractéristique de canal tertiaire H'''n,l par la division complexe dudit signal reçu Yn, l avec ledit vecteur de représentation X'''n,l;
- calculant une caractéristique de canal quaternaire H''''n,l par le filtrage dudit H'''n,l dans la direction de fréquence
- calculant un vecteur de représentation quaternaire X''''n,l par la division dudit signal reçu Yn,l avec ladite caractéristique de canal quaternaire H''''n,l, par cela décodant ledit signal de données.

5. Procédé de la revendication 1, comprenant encore les pas de:

- prévoyant un premier seuil de sûreté pour chaque type de représentation à un temps de ladite décision permanente, substituant une caractéristique de canal primaire H'n,l obtenue par l'utilisation des points de signal dans le cadre du seuil prédéderminé pour ladite caractéristique de canal Hn,l à ladite position de porteuse et filtrant ladite caractéristique de canal H'n,l dans la direction de fréquence, par cela calculant une caractéristique de canal secondaire H"n,l;

- reconstituant des vecteurs de représentation secondaires X"n,l à un signal à paramètres de transmission et un signal de données, placés aux positions de porteuses respectives par la division dudit signal reçu Yn,l par ladite caractéristique de canal H"n,l;
- calculant un vecteur de représentation tertiaire X'''n,l à chaque position de porteuse par la décision desdits vecteurs de représentation X"n,l;
- prévoyant un second seuil de sûreté pour chaque type de représentation à un temps de ladite décision permanente et substituant une caractéristique de canal tertiaire H'''n,l obtenue par l'utilisation des points de signal dans le cadre du seuil prédéterminé pour ladite caractéristique de canal H"n,l à ladite position de porteuse;
- calculant une caractéristique de canal quaternaire H''''n,l par le filtrage de ladite caractéristique de canal H'''n, l dans la direction de fréquence; et
- calculant un vecteur de représentation quaternaire X''''n,l par la division dudit signal reçu Yn,l avec la caractéristique de canal H''''n,l par cela décodant ledit signal de données.

6. Procédé selon l'une quelconque des revendications 1 à 5, comprenant encore les pas suivants :

- obtenant un signal à paramètres de transmission et un signal de données, placés aux positions de porteuses respectives par l'utilisation desdites caractéristiques de canal;
- obtenant des vecteurs de représentation par la décision permanente des signaux résultants; et
- répétant l'obtention d'une nouvelle caractéristique de canal par l'utilisation desdits vecteurs de représentation, par cela décodant ledit signal de données.

7. Procédé de la revendication 1, comprenant encore les pas de:

- calculant une caractéristique de canal secondaire H"n,l par le filtrage de ladite caractéristique de canal primaire H'n,l dans la direction de fréquence:

  - extrayant une caractéristique de canal dudit signal pilote dispersé SPn,k de ladite caractéristique de canal secondaire H"n,l;
  - calculant une caractéristique de canal tertiaire H'''n,l par l'interpolation de ladite caractéristique de canal extraite dans la direction de temps et dans la direction de fréquence; et
  - calculant un vecteur de représentation X"n,l par la division dudit signal reçu Yn,l à ladite caractéristique de canal tertiaire H'''n,l, par cela décodant ledit signal de données.

8. Procédé de la revendication 1, comprenant encore les pas de:

- calculant une caractéristique de canal secondaire H"n,l par le filtrage de ladite caractéristique de canal primaire H'n,l dans la direction de fréquence;
- tardant ladite caractéristique de canal secondaire H"n,l par deux symboles et d'une caractéristique de canal H"n-2,l tardée par deux symboles et une caractéristique de canal H"n,l sans retard par symbole, calculant une caractéristique de canal tertiaire H'''n,l de symbole entre tels symboles; et
- calculant un vecteur de représentation secondaire X"n-1,l par la division dudit signal reçu Yn-1,l à ladite caractéristique de canal tertiaire H'''n-1,l par cela décodant ledit signal de données.

9. Procédé de la revendication 1, comprenant encore les pas de:

- calculant une caractéristique de canal secondaire H"n,l par le filtrage de ladite caractéristique de canal primaire H'n,l dans la direction de fréquence;
- tardant ladite caractéristique de canal H"n,l par un symbole et deux symboles;
- de ladite caractéristique de canal H"n-2,l tardée par deux symboles, ladite caractéristique de canal H"n-1,l tardée par un symbole et une caractéristique de canal H"n,l sans retard par symbole, calculant une caractéristique de canal tertiaire H'''n-1,l de symbole entre tels symboles; et
- calculant un vecteur de représentation secondaire X"n-1,l par la division du signal reçu Yn-1,l obtenu par le retard dudit signal reçu par un symbole avec ledit H'''n-1,l par cela décodant ledit signal des données.

10. Démodulateur pour un système de transmission multiplexé par répartition de fréquences orthogonales qui module une pluralité de porteuses avec leurs fréquences orthogonales l'une avec l'autre, pour chaque période symbole pour transmettre information digitale, où

- un signal pilote dispersé SPn,k est disposé à une position de porteuse de sorte qu'un nombre de porteuse k satisfait K+ 3 * (n mode 4) + 12p, où n est un nombre symbole, p est un nombre entier et mode indique une opération à rest;
- des signaux pilotes continus et des signaux à paramètres de transmission sont placés aux positions de porteuses spécifiées; et
- lesdits signaux pilotes dispersés et lesdits signaux pilotes continus sont modulés par l'amplitude spécifiée et la phase qui sont uniquement déterminées par ledit nombre de porteuse k de ladite porteuse dans une bande de transmission;
- ledit démodulateur comprenant:

  - un premier égaliseur qui égalise un signal reçu Yn,l où 1 indique un nombre entier par l'utilisation dudit signal pilote dispersé SPn,k et qui calcule une caractéristique de canal Hn,l et des vecteurs de représentation Xn,l de signaux placés aux porteuses respectives; **caractérisé en ce qu'**
  - un second égaliseur qui calcule un vecteur de représentation primaire X'n,l par la décision permanente du vecteur de représentation Xn,l, obtenu par ledit égaliseur A; qui obtient une caractéristique de canal primaire H'n,l par la division complexe du signal reçu Yn,l avec le vecteur de représentation X'n,l qui obtient une caractéristique de canal secondaire H''n,l par le filtrage dans la direction de fréquence de la caractéristique de canal H'n,l; qui re-égalise ledit signal reçu Yn,l par l'utilisation de ladite caractéristique de canal H'''n,l, par cela décodant ledit signal des données.

**11.** Démodulateur de la revendication 10, où ledit premier égaliseur comprend:

- un premier bloc d'estimation de canal qui a un générateur de signaux pilotes dispersés, qui produit un signal connu, un premier diviseur complexe qui fait la division complexe dudit signal pilote dispersé SPn,k du signal reçu Yn,l assujetti à FFT par une sortie dudit générateur de signaux pilotes dispersés, un bloc d'interpolation pour direction de temps et un bloc d'interpolation pour direction de fréquence qui font l'interpolation d'une sortie dudit premier diviseur complexe dans les directions de temps et de fréquence, respectivement de telle manière pour calculer une caractéristique de canal Hn,l; et
- un second diviseur complexe qui fait la division complexe dudit signal reçu Yn,l avec ladite caractéristique de canal Hn,l pour obtenir un vecteur de représentation Hn,l et
- ledit second égaliseur comprend:

  - un bloc de décisions permanentes qui présente une unité de décisions permanentes qui décide la sortie Xn,l dudit premier égaliseur, un générateur de vecteurs de représentation qui calcule un vecteur de représentation primaire X'n,l ayant à base le résultat de décision de ladite unité de décisions permanentes et un bloc de détection de la sûreté qui détecte la sûreté du résultat de la décision permanente
  - un second bloc d'estimation de canal qui présente un troisième diviseur complexe qui fait la division complexe dudit signal reçu Yn,l avec ledit vecteur de représentation primaire X'n,l , un circuit de sélection qui sélecte une sortie H'n,l dudit troisième diviseur complexe et ladite caractéristique de canal Hn,l dépendant d'une sortie dudit bloc de détection de la sûreté et une filtre pour direction de fréquence qui filtre une sortie dudit circuit de sélection; et
  - un quatrième diviseur complexe qui fait la division complexe dudit signal reçu Yn,l avec ladite caractéristique de canal secondaire H''n,l sorti dudit filtre pour direction de fréquence pour calculer un vecteur de représentation secondaire Xn,l.

**12.** Démodulateur de la revendication 10, où le bloc de détection de ladite sûreté utilise un seuil de sûreté à chaque type de représentation et détermine si le vecteur de représentation Xn,l est ou non dans le cadre du seuil de sûreté; et

- ledit circuit de sélection sélecte ladite caractéristique de canal primaire H'n,l quand ledit vecteur de représentation est dans le cadre du seuil de sûreté.

**13.** Démodulateur de la revendication 12, où ledit seuil de sûreté est déterminé par distances euclidiennes entre ledit vecteur de représentation Xn,l et ledit vecteur de représentation prédéterminé X'n,l.

**14.** Démodulateur de la revendication 10, comprenant encore:

- un troisième égaliseur qui décide un vecteur de représentation X''n,l obtenu audit second égaliseur qui calcule une caractéristique de canal tertiaire H'''n,l par l'utilisation d'un vecteur de représentation tertiaire X'''n,l obtenu par décision permanente et ledit signal reçu Yn,l qui calcule une caractéristique de canal quaternaire H''''n,l par le filtrage de ladite caractéristique de canal H'''n,l dans la direction de fréquence, qui re-égalise ledit signal reçu Yn,l par 1' utilisation de ladite caractéristique de canal H''''n,l et qui calcule un vecteur de représentation quaternaire X''''n,l.

**15.** Démodulateur de la revendication 14, où ledit premier égaliseur comprend:

- un premier bloc d'estimation canal qui a un générateur de signaux pilotes dispersés qui fait générer un signal pilote dispersé connu, un premier diviseur complexe qui divise de manière complexe ledit signal pilote dispersé SPn,k du signal reçu Yn,l assujetti à FFT par une sortie dudit générateur de signaux pilotes dispersés, un bloc d'interpolation pour direction de temps et un bloc d'interpolation pour direction de fréquence qui font l'interpolation d'une sortie dudit premier diviseur complexe dans la direction de temps, respectivement de fréquence pour calculer la caractéristique de canal Hn,l; et
- un second diviseur complexe qui divise de manière complexe ledit signal reçu Yn,l à ladite caractéristique de canal Hn,l pour obtenir un vecteur de représentation Xn,l;
- ledit second égaliseur comprend;
- un bloc de décisions permanentes qui a une première unité de décisions permanentes qui décide une sortie Xn,l dudit premier égaliseur, un premier générateur de vecteurs de représentation qui calcule un vecteur de représentation primaire X'n,l de la sortie de ladite unité de décisions permanentes et un premier bloc de détection de la sûreté qui détecte le résultat de sûreté de ladite première unité de décisions permanentes;
- un second bloc d'estimation de canal qui a un troisième diviseur complexe qui fait la division complexe dudit signal reçu Yn,l avec le vecteur de représentation primaire X'n,l, un premier circuit de sélection qui sélecte une sortie H'n,l dudit troisième diviseur complexe et ladite caractéristique de canal Hn,l dépendant d'une sortie dudit bloc de détection de la sûreté et un premier filtre pour direction de fréquence qui filtre une sortie dudit premier circuit de sélection; et
- un quatrième diviseur complexe qui calcule un vecteur de représentation secondaire X''n,l par la division complexé dudit signal reçu Yn,l par ladite caractéristique de canal secondaire H''n,l sortie dudit premier filtre pour direction de fréquence; et
- ledit troisième égaliseur comprend:

  - un second bloc de décisions permanentes qui présente une seconde unité de décisions permanentes qui décide une sortie X''n,l dudit second égaliseur, un second générateur de vecteurs de représentation qui calcule un vecteur de représentation X'''n,l d'une sortie de ladite seconde unité de décisions permanentes et un second bloc de détection de la sûreté qui détecte la sûreté du résultat de la décision permanente;
  - un troisième bloc d'estimation de canal qui a un cinquième diviseur complexe qui fait la division complexe dudit signal.reçu Yn,l avec ledit vecteur représentation X'''n,l, un second circuit de sélection qui sélecte une sortie H'''n,l dudit cinquième diviseur complexe et ladite caractéristique de canal H''n,l dépendant d'une sortie dudit second bloc de détection de la sûreté et un second filtre pour direction de fréquence qui filtre une sortie dudit second circuit de sélection; et
  - un sixième diviseur complexe qui calcule un vecteur de représentation quaternaire X''''n,l par la division complexe dudit signal reçu Yn,l par une sortie H''''n,l dudit second filtre pour direction de fréquence.

**16.** Démodulateur de la revendication 15, où ledit second bloc de détection de la sûreté utilise un seuil de sûreté à chaque type de représentation et détermine si un vecteur de représentation est ou non dans le cadre du seuil de sûreté; et

  - ledit second circuit de sélection sélecte H'n,l ou H'''n,l dans la cas quand le vecteur de représentation est dans le cadre du seuil de sûreté.

**17.** Démodulateur selon l'une quelconque des revendications 11 à 16, où une pluralité d'égaliseurs sont prévus de sorte qu'un signal à paramètres de transmission, un signal de données qui sont placés dans les positions de porteuses respectives sont obtenus par l'utilisation de ladite caractéristique de canal, les signaux résultants sont décidés comme permanentes pour obtenir les vecteurs de représentation, une nouvelle caractéristique de canal est obtenue par l'utilisation desdits vecteurs de représentation et tel procès est répété et par cela ledit signal de données est décodé.

**18.** Démodulateur de la revendication 10, comprenant encore:

- un troisième égaliseur qui extrait une caractéristique de canal pour ledit signal pilote dispersé SPn,k de la caractéristique de canal H"n,l obtenue audit second égaliseur qui fait l'interpolation de ladite caractéristique de canal extraite dans les directions de temps et de fréquence, par cela calculant une caractéristique de canal tertiaire H'''n,l et qui divise ledit signal reçu Yn,l par ladite caractéristique de canal tertiaire H'''n,l par cela calculant un vecteur de représentation X"n,l.

19. Démodulateur de la revendication 18, où ledit premier égaliseur comprend:

- un premier bloc d'estimation canal qui a un générateur de signaux pilotes dispersés qui fait générer un signal SP connu, un premier diviseur complexe qui divise de manière complexe ledit signal pilote dispersé SPn,k du signal reçu Yn,l assujetti à FFT par une sortie dudit générateur de signaux SP, un bloc d'interpolation pour direction de temps et un bloc d'interpolation pour direction de fréquence qui font l'interpolation d'une sortie dudit premier diviseur complexe dans la direction de temps et de fréquence, respectivement pour calculer la caractéristique de canal Hn,l; et
- un second diviseur complexe qui divise de manière complexe ledit signal reçu Yn,l avec ladite caractéristique de canal Hn,l pour obtenir un vecteur de représentation Xn,l;
- ledit second égaliseur comprend;
- un bloc de décisions permanentes qui a une première unité de décisions permanentes qui décide la sortie Xn,l dudit premier égaliseur, un premier générateur de vecteurs de représentation qui calcule un vecteur de représentation primaire X'n,l dans la base du résultat de décision de ladite unité de décisions permanentes et un bloc de détection de la sûreté qui détecte la sûreté du résultat de décision permanente;
- un second bloc d'estimation de canal qui a un troisième diviseur complexe qui fait la division complexe dudit signal reçu Yn,l avec le vecteur de représentation primaire X'n,l, un premier circuit de sélection qui sélecte une sortie H'n,l dudit troisième diviseur complexe et ladite caractéristique de canal Hn,l dépendant d'une sortie dudit bloc de détection de la sûreté et un filtre pour direction de fréquence qui filtre une sortie dudit circuit de sélection et produit un caractéristique de canal secondaire H"n,l; et
- ledit troisième égaliseur comprend:

  - une unité pilote d'extraction qui extrait un signal pilote dispersé à une position de signal pilote dispersé SPn,k par l'utilisation de la caractéristique de canal H"n,l obtenue par ledit second égaliseur:

    - des blocs d'interpolation dans les directions de temps et de fréquence qui font l'interpolation d'une sortie de ladite unité d'extraction de signal pilote dispersé dans les directions de temps et de fréquence pour calculer une caractéristique de canal tertiaire H'''n,l; et
    - un quatrième diviseur complexe qui fait la division complexe dudit signal reçu Yn,l par ladite caractéristique de canal H'''n,l.

20. Démodulateur de la revendication 10, comprenant encore:

- un troisième égaliseur qui tarde la caractéristique de canal H"n,l obtenue audit second égaliseur par deux symboles qui d'une caractéristique de canal H'''n-2,l tardée par deux symboles et la caractéristique de canal H'''n,l sans retard par symbole calcule une caractéristique de canal quaternaire H''''n-1,l pour symbole entre tels symboles et qui fait la division dudit signal reçu Yn-1,l avec ladite caractéristique de canal H''''n-1,1 par cela calculant un vecteur de représentation secondaire X"n-1,l.

21. Démodulateur de la revendication 20, où ledit premier égaliseur comprend:

- un premier bloc d'estimation de canal qui a un générateur de signaux pilotes dispersés qui fait générer un signal pilote dispersé connu, un premier diviseur complexe qui divise de manière complexe ledit signal pilote dispersé SPn,k du signal reçu Yn,l assujetti à FFT par une sortie dudit générateur de signaux pilotes dispersés, un bloc d'interpolation dans la direction de temps et un bloc d'interpolation dans la direction de fréquence qui font l'interpolation d'une sortie dudit premier diviseur complexe dans la direction de temps et de fréquence, respectivement pour calculer la caractéristique de canal Hn,l; et
- un second diviseur complexe qui divise de manière complexe ledit signal reçu Yn,l avec ladite caractéristique de canal Hn,l pour obtenir un vecteur de représentation Xn,l;
- ledit second égaliseur comprend;
- un bloc de décisions permanentes qui a une unité de décisions permanentes qui décide la sortie Xn,l dudit premier égaliseur, un générateur de vecteurs de représentation qui calcule un vecteur de représentation primaire X'n,l ayant à base une sortie de ladite unité de décisions permanentes et un bloc de détection de la sûreté qui détecte le résultat de la sûreté de décision permanente;et

- un second bloc d'estimation de canal qui a un troisième diviseur complexe qui fait la division complexe dudit signal reçu Yn,l avec le vecteur de représentation primaire X'n,l, un circuit de sélection qui sélecte une sortie H'n,l dudit troisième diviseur complexe et ladite caractéristique de canal Hn,l dépendant d'une sortie dudit bloc de détection de la sûreté et un filtre pour direction de fréquence qui filtre une sortie dudit circuit de sélection pour obtenir une caractéristique de canal secondaire H"n,l; et
- ledit troisième égaliseur comprend:

    - une unité de retard à deux symboles qui tarde la caractéristique de canal H"n,l obtenue audit second égaliseur par deux symboles;
    - un bloc à filtre pour la direction de temps qui fait l'interpolation dans la direction de temps pour une sortie H"n-2,1 de ladite unité de retard à deux symboles et la caractéristique de canal H"n,l sans retard par symbole pour obtenir une caractéristique de canal tertiaire H'''n-1,l; et
    - un quatrième diviseur complexe qui fait la division complexe du signal Yn-1,l qui est obtenu par le retard dudit signal reçu par un symbole par une sortie H'''n,l dudit bloc à filtre pour direction de temps.

**22.** Démodulateur de la revendication 10, comprenant:

- un troisième égaliseur qui tarde ladite caractéristique de canal H"n,l obtenue par le second égaliseur par un symbole respectivement deux symboles qui d'une caractéristique de canal H"n-1,l tardée par un symbole, une caractéristique de canal H"n-2,1 tardée par deux symboles et ladite caractéristique de canal H"n,l sans retard par symbole, calcule une H'''n-1,l pour un symbole entre tels symboles et qui divise Yn-1,l obtenu par le retard dudit signal reçu par un symbole par une caractéristique de canal tertiaire H'''n-1,l par cela calculant un vecteur de représentation secondaire X"n-1,l.

**23.** Démodulateur de la revendication 22, où ledit premier égaliseur comprend:

- un premier bloc d'estimation canal qui a un générateur de signaux pilotes dispersés qui fait générer un signal pilote dispersé connu, un premier diviseur complexe qui divise de manière complexe ledit signal pilote dispersé SPn,k du signal reçu Yn,l assujetti à FFT par une sortie dudit générateur de signaux pilotes dispersés, un bloc d'interpolation pour direction de temps et un bloc d'interpolation pour direction de fréquence qui font l'interpolation d'une sortie dudit premier diviseur complexe dans les directions de temps et de fréquence, respectivement pour calculer la caractéristique de canal Hn,l; et
- un second diviseur complexe qui divise de manière complexe ledit signal reçu Yn,l avec ladite caractéristique de canal Hn,l pour obtenir un vecteur de représentation Xn,l;
- ledit second égaliseur comprend;
- un bloc de décisions permanentes qui a une première unité de décisions permanentes qui décide la sortie Xn,l dudit premier égaliseur , un premier générateur de vecteurs de représentation qui calcule un vecteur de représentation primaire X'n,l ayant à base une sortie de ladite unité de décisions permanentes et un bloc de détection de la sûreté qui détecte le résultat de sûreté de la décision permanente;
- un second bloc d'estimation de canal qui a un troisième diviseur complexe qui fait la division complexe dudit signal reçu Yn,l avec le vecteur de représentation primaire X'n,l, un premier circuit de sélection qui sélecte une sortie H'n,l dudit troisième diviseur complexe et ladite caractéristique de canal Hn,l dépendant d'une sortie dudit bloc de détection de la sûreté et un filtre pour direction de fréquence qui filtre une sortie dudit circuit de sélection et produit un caractéristique de canal secondaire H"n,l; et
- ledit troisième égaliseur comprend:

    - des unités de retard à symboles en cascade qui tardent ladite caractéristique de canal H"n,l obtenue par le second égaliseur par un symbole respectivement deux symboles;
    - un bloc à filtre pour la direction de temps qui fait l'interpolation dans la direction de temps de ladite caractéristique de canal H"n-2,l et H"n-1,l desdites unités de retard à symboles en cascade et ladite caractéristique de canal H"n,l sans retard par symboles pour obtenir une caractéristique de canal tertiaire H'''n-1,l; et
    - un quatrième diviseur complexe qui divise de manière complexe un signal Yn-1,l obtenu par le retard dudit signal reçu par un symbole par ladite caractéristique de canal tertiaire H'''n-1,l obtenue dudit bloc à filtre pour la direction de temps.

FIG. 1

# F I G.  2

- ● SP signal
- ⊕ CP signal
- ⦀ TMCC signal
- ◍ AC signal
- ○ DATA signal

## FIG. 3

BPSK

QPSK

16QAM

64QAM

F I G. 4

## F I G. 5 A

CONVENTIONAL
DECODING
METHOD

## F I G. 5 B

DECODING
METHOD OF
PRESENT INVENTION
(ONE PROCESS)

F I G. 5 C

DECODING
METHOD OF
PRESENT INVENTION
(TWO PROCESS)

FIG. 6

EP 1 313 282 B1

EP 1 313 282 B1

F I G. 7

F I G. 8

FIG. 9

EP 1 313 282 B1

EP 1 313 282 B1

F I G. 1 0

FIG. 11

F I G. 1 2

FIG. 13

F I G. 1 4

F I G. 1 5

EP 1 313 282 B1

FIG. 16